# EUROPÄISCHE PATENTSCHRIFT

(11) **EP 0 790 771 B1**
(45) Veröffentlichungstag und Bekanntmachung des Hinweises auf die Patenterteilung: **20.01.1999**
(21) Anmeldenummer: 95937025.5
(22) Anmeldetag: 30.10.1995
(51) Int. Cl.: A01N 47/36

(54) **KOMBINATIONEN AUS PHENYLSULFONYLHARNSTOFF-HERBIZIDEN UND SAFENERN**
COMBINATIONS OF PHENYLSULPHONYL UREA HERBICIDES AND SAFENERS
ASSOCIATIONS D'HERBICIDES A LA PHENYLSULFONYLUREE ET DE PHYTOPROTECTEURS

(30) Priorität: 11.11.1994 DE 4440354
(43) Veröffentlichungstag der Anmeldung: 27.08.1997
(73) Patentinhaber: Hoechst Schering AgrEvo GmbH, 13509 Berlin (DE)
(72) Erfinder: WILLMS, Lothar, D-65719 Hofheim (DE); BIERINGER, Hermann, D-65817 Eppstein (DE); HACKER, Erwin, D-65239 Hochheim (DE); SCHNABEL, Gerhard, D-63868 Gro wallstadt (DE); LORENZ, Klaus, D-64331 Weiterstadt (DE)
(86) Internationale Anmeldenummer: EP9504240
(87) Internationale Veröffentlichungsnummer: WO9614747

(56) Entgegenhaltungen:
- EP-A- 0 492 367
- DE-A- 4 230 933
- DE-A- 4 236 902
- DE-A- 4 335 297

## Beschreibung

Die Erfindung betrifft das technische Gebiet der Pflanzenschutzmittel, insbesondere Wirkstoff-Antidot-Kombinationen ( = Wirkstoff-Safener-Kombinationen), die hervorragend für den Einsatz gegen konkurrierende Schadpflanzen in Nutzpflanzenkulturen geeignet sind.

Einige neuere herbizide Wirkstoffe zeigen sehr gute anwendungstechnische Eigenschaften und können in sehr kleinen Aufwandmengen gegen ein breites Spektrum von grasartigen und breitblättrigen Unkräutern eingesetzt werden.

Jedoch sind viele der hochwirksamen Wirkstoffe nicht voll verträglich mit (d.h. nicht selektiv genug bei) einigen wichtigen Kulkturpflanzen, wie Mais, Reis oder Getreide, so daß ihrem Einsatz enge Grenzen gesetzt sind. Sie können deshalb in manchen Kulturen überhaupt nicht oder nur in so geringen Aufwandmengen eingesetzt werden, daß die erwünschte breite herbizide Wirksamkeit gegenüber Schadpflanzen nicht gewährleistet ist. Speziell können viele Herbizide der weiter unten definierten Formel (A) nicht vollständig selektiv gegen Schadpflanzen in Mais, Reis, Getreide oder einigen anderen Kulturen eingesetzt werden.

Einige unserer neuen experimentellen Arbeiten haben nun gezeigt, daß Kulturpflanzen, wie Mais, Reis, Weizen, Gerste und andere, überraschenderweise vor unerwünschten Schäden der erwähnten Herbizide geschützt werden können, wenn sie zusammen mit bestimmten Verbindungen ausgebracht werden, die als Herbizid-Antidots oder Safener wirken.

EP-A-0 492 367 offenbart herbizide Mittel, welche
A) ein oder mehrere Herbizide aus der Gruppe der Sulfonylharnstoffe und Imidazolinone und
B) ein oder mehrere Safener aus der Gruppe
   B1) phenylsubstituierte Pyrazole-, Pyrazolin und Triazol-carbonsäurederivate und der Benzylisoxazolincarbonsäurederivate und/oder
   B2) Chinolin-8-oxyalkancarbonsäurederivate,
ausgenommen Kombinationen von Imidazolinonen mit Verbindungen der Formel B2, in einer wirksamen Menge enthalten.

Die Mittel sind besonders geeignet zum Schutz von Kulturpflanzen vor phytotoxischen Nebenwirkungen von Sulfonylharnstoff-Herbiziden und Imidazolinon-Herbiziden. Im Falle der Imidazolinon-Herbizide betrifft die Erfindung auch ein Verfahren zum Schützen von Maispflanzen, wobei eine wirksame Menge eines Chinolin-8-oxyalkancarbonsäurederivats zusammen mit dem Imidazolinon-Herbizid im Nachauflaufverfahren auf die Pflanzen oder die Anbaufläche appliziert wird.

Gegenstand der Erfindung sind daher Herbizid-Safener-Kombinationen, beispielsweise in Form von herbiziden Mitteln, enthaltend
A) mindestens einen herbiziden Wirkstoff aus der Gruppe der substituierten Phenylsulfonylharnstoffe der Formel (A) und deren Salze 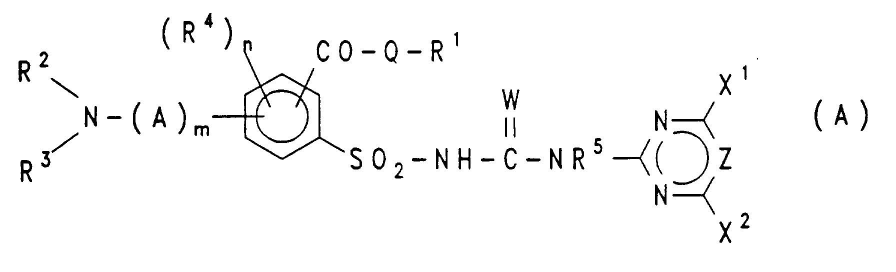 worin
   - W: O oder S, vorzugsweise O,
   - A: eine Gruppe der Formel CR'R'', worin R' und R'' unabhängig voneinander H oder (C₁-C₄)Alkyl bedeuten,
   - Q: O, S oder eine Gruppe NR⁶,
   - m: 0 oder 1,
   - n: 0, 1, 2 oder 3,
   - R¹: H, einen Kohlenwasserstoffrest oder einen heterocyclischen Rest, wobei jeder der zwei letztgenannten Reste unsubstituiert oder substituiert ist,
   - R²: H, OH oder einen aliphatischen Kohlenwasserstoff- oder Kohlenwasserstoffoxyrest, wobei jeder der zwei letztgenannten Reste unsubstituiert oder substituiert ist, R³ einen Acylrest,
   - R⁴: Halogen, CN, NO₂, (C₁-C₄)Alkyl, (C₁-C₄)Alkoxy, [(C₁-C₄)Alkyl]-carbonyl, [(C₁-C₄)Alkoxy]-carbonyl, wobei jeder der vier letztgenannten Reste unsubstituiert oder substituiert ist,
   - R⁵: H, (C₁-C₅)Alkyl oder (C₁-C₄)Alkoxy,
   - R⁶: H, (C₁-C₄)Alkyl, (C₃-C₄)Alkenyl, (C₃-C₄)Alkinyl, wobei jeder der letztgenannten drei Reste unsubstituiert oder durch einen oder mehrere Reste aus der Gruppe Halogen, (C₁-C₄)Alkyl, (C₁-C₄)Alkoxy und (C₁-C₄)Alkylthio substituiert ist, oder (C₁-C₄)Alkoxy oder OH,
   - X¹, X²: unabhängig voneinander H, Halogen, (C₁-C₆)Alkyl, (C₂-C₆)Alkenyl, (C₂-C₆)Alkinyl, (C₃-C₇)Cycloalkyl, (C₁-C₆)Alkoxy, (C₂-C₆)Alkenyloxy, (C₂-C₆)Alkinyloxy, (C₁-C₆)Alkylthio, Mono- oder Di-[(C₁-C₄)alkyl]-amino, wobei jeder der zehn letztgenannten Reste unsubstituiert oder durch einen oder mehrere Reste aus der Gruppe Halogen, (C₁-C₄)Alkoxy, (C₁-C₄)Haloalkoxy und (C₁-C₄)Alkylthio substituiert ist, und
   - Z: CH, N oder eine Gruppe der Formel 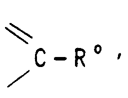 worin R^{o} Halogen, Cyano, (C₁-C₃)Alkyl, (C₁-C₃)Haloalkyl, (C₁-C₃)Alkoxy oder (C₁-C₃)Haloalkoxy ist,
   bedeuten, und
B) mindestens einen Safener aus der Gruppe der Verbindungen der Formeln (B1) und (B2), 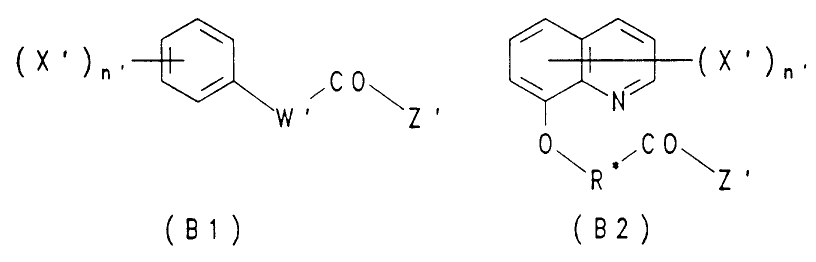 in welchen
   - X': Wasserstoff, Halogen, (C₁-C₄)Alkyl, (C₁-C₄)Alkoxy, Nitro oder (C₁-C₄)Halogenalkyl bedeutet,
   - Z': OR⁷, SR⁷ oder NR⁷R⁸ bedeutet oder für einen gesättigten oder ungesättigten 3- bis 7-gliedrigen Heterocyclus mit mindestens einem N-Atom und bis zu 3 Heteroatomen steht, der über das N-Atom mit der Carbonylgruppe in (B1) bzw. (B2) verbunden ist und unsubstituiert oder durch Reste aus der Gruppe (C₁-C₄)Alkyl, (C₁-C₄)Alkoxy oder gegebenenfalls substituiertes Phenyl substituiert ist, vorzugsweise einen Rest der Formel OR⁷, NHR⁸ oder N(CH₃)₂, insbesondere der Formel OR⁷, bedeutet,
   - R*: eine (C₁ oder C₂)-Alkandiylkette bedeutet, die unsubstituiert oder mit einem oder zwei (C₁-C₄)Alkylresten oder mit [(C₁-C₃)-Alkoxy]-carbonyl substituiert ist,
   - R⁷: Wasserstoff oder einen unsubstituierten oder substituierten aliphatischen Kohlenwasserstoffrest, vorzugsweise mit insgesamt 1 bis 18 C-Atomen, bedeutet,
   - R⁸: Wasserstoff, (C₁-C₆)Alkyl, (C₁-C₆)Alkoxy oder gegebenenfalls substituiertes Phenyl bedeutet,
   - n': eine ganze Zahl von 1 bis 5, vorzugsweise 1 bis 3 ist,
   - W': einen divalenten heterocyclischen Rest aus der Gruppe der teilungesättigten oder heteroaromatischen Fünfring-Heterocyclen mit 1 bis 3 Heteroringatomen des Typs N und O, wobei mindestens ein N-Atom und höchstens ein O-Atom im Ring enthalten ist, vorzugsweise einen Rest aus der Gruppe der Reste der Formeln (W1) bis (W4) bedeutet, 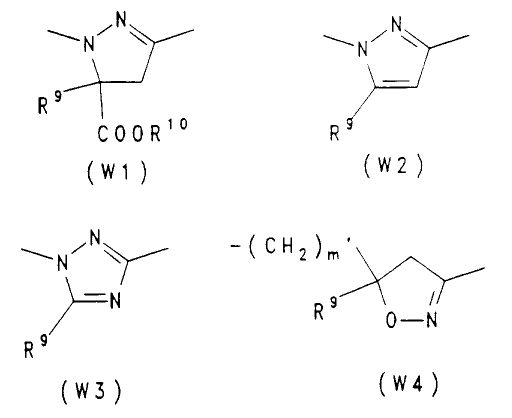
   - R⁹: Wasserstoff, (C₁-C₈)Alkyl, (C₁-C₈)Halogenalkyl, (C₃-C₁₂)Cycloalkyl oder gegebenenfalls substituiertes Phenyl bedeutet,
   - R¹⁰: Wasserstoff, (C₁-C₈)Alkyl, (C₁-C₈)Halogenalkyl, (C₁-C₄)Alkoxy(C₁-C₄)alkyl, (C₁-C₆)Hydroxyalkyl, (C₃-C₁₂)Cycloalkyl oder Tri-(C₁-C₄)-alkyl-silyl bedeutet und
   - m': 0 oder 1 bedeutet.

Sofern es im einzelnen nicht anders definiert wird, gelten für die Reste in den Formeln zu (A), (B1) und (B2) und nachfolgenden Formeln die folgenden Definitionen.
Die Reste Alkyl, Alkoxy, Haloalkyl, Haloalkoxy, Alkylamino und Alkylthio sowie die entsprechenden ungesättigten und/oder substituierten Reste können im Kohlenstoffgerüst jeweils geradkettig oder verzweigt sein. Wenn nicht speziell angegeben, sind bei diesen Resten die niederen Kohlenstoffgerüste, z.B. mit 1 bis 6 C-Atomen bzw. bei ungesättigten Gruppen mit 2 bis 6 C-Atomen, bevorzugt. Alkylreste, auch in den zusammengesetzten Bedeutungen wie Alkoxy, Haloalkyl usw., bedeuten z.B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl; Alkinyl bedeutet z.B. Propargyl, But-2-in-1-yl, But-3-in-1-yl, 1-Methyl-but-3-in-1-yl. "(C₁-C₄)-Alkyl" ist die Kurzschreibweise für Alkyl mit 1 bis 4 C-Atomen; entsprechendes gilt für andere allgemeine Restedefinitionen mit in Klammern angegebenen Bereichen für die mögliche Anzahl von C-Atomen.

Halogen bedeutet beispielsweise Fluor, Chlor, Brom oder Iod. Haloalkyl, -alkenyl und -alkinyl bedeuten durch Halogen, vorzugsweise durch Fluor, Chlor und/oder Brom, insbesondere durch Fluor oder Chlor, teilweise oder vollständig substituiertes Alkyl, Alkenyl bzw. Alkinyl, z.B. CF₃, CHF₂, CH₂F, CF₃CF₂, CH₂FCHCl, CCl₃, CHCl₂, CH₂CH₂Cl; Haloalkoxy ist z.B. OCF₃, OCHF₂, OCH₂F, CF₃CF₂O, OCH₂CF₃ und OCH₂CH₂Cl; entsprechendes gilt für Haloalkenyl und andere durch Halogen substituierte Reste.

Ein Kohlenwasserstoffrest ist ein geradkettiger, verzweigter oder cyclischer und gesättigter oder ungesättigter aliphatischer oder aromatischer Kohlenwasserstoffrest, z.B. Alkyl, Alkenyl, Alkinyl, Cycloalkyl, Cycloalkenyl oder Aryl; Aryl bedeutet dabei ein mono-, bi- oder polycyclisches aromatisches System, beispielsweise Phenyl, Naphthyl, Tetrahydronaphthyl, Indenyl, Indanyl, Pentalenyl, Fluorenyl und ähnliches, vorzugsweise Phenyl;
vorzugsweise bedeutet ein Kohlenwasserstoffrest Alkyl, Alkenyl oder Alkinyl mit bis zu 12 C-Atomen oder Cycloalkyl mit 3, 4, 5, 6 oder 7 Ringatomen oder Phenyl; entsprechendes gilt für einen Kohlenwasserstoffrest in einem Kohlenwasserstoffoxyrest.

Ein heterocyclischer Rest oder Ring (Heterocyclyl) kann gesättigt, ungesättigt oder heteroaromatisch sein; er enthält vorzugsweise ein oder mehrere Heteroeinheiten im Ring, vorzugsweise aus der Gruppe N, O, S, SO, SO₂; vorzugsweise ist er ein aliphatischer Heterocyclylrest mit 3 bis 7 Ringatomen oder ein heteroaromatischer Rest mit 5 oder 6 Ringatomen und enthält 1, 2 oder 3 Heteroeinheiten. Der heterocyclische Rest kann z.B. ein heteroaromatischer Rest oder Ring (Heteroaryl) sein, wie z.B. ein mono-, bi- oder polycyclisches aromatisches System, in dem mindestens 1 Ring ein oder mehrere Heteroatome enthält, beispielsweise Pyridyl, Pyrimidinyl, Pyridazinyl, Pyrazinyl, Thienyl, Thiazolyl, Oxazolyl, Furyl, Pyrrolyl, Pyrazolyl und Imidazolyl, oder ist ein partiell hydrierter Rest wie Oxiranyl, Pyrrolidyl, Piperidyl, Piperazinyl, Dioxolanyl, Morpholinyl, Tetrahydrofuryl. Als Substituenten für einen substituierten heterocyclischen Rest kommen die weiter unten genannten Substituenten in Frage, zusätzlich auch Oxo. Die Oxogruppe kann auch an den Heteroringatomen, die in verschiedenen Oxidationsstufen existieren können, z.B. bei N und S, auftreten.

Substituierte Reste, wie substituierte Kohlenwasserstoffreste, z.B. substituiertes Alkyl, Alkenyl, Alkinyl, Aryl, Phenyl und Benzyl, oder substituiertes Heterocyclyl oder Heteroaryl, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino wie Acylamino, Mono- und Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor.

Mono- oder disubstituiertes Amino bedeutet einen chemisch stabilen Rest aus der Gruppe der substituierten Aminoreste, welche beispielsweise durch einen bzw. zwei gleiche oder verschiedene Reste aus der Gruppe Alkyl, Alkoxy, Acyl und Aryl N-substituiert ist; vorzugsweise Monoalkylamino, Dialkylamino, Acylamino, Arylamino, N-Alkyl-N-arylamino sowie N-Heterocyclen; dabei sind Alkylreste mit 1 bis 4 C-Atomen bevorzugt; Aryl ist dabei vorzugsweise Phenyl oder substituiertes Phenyl; für Acyl gilt dabei die weiter unten genannte Definition, vorzugsweise (C₁-C₄)Alkanoyl. Entsprechenes gilt für substituiertes Hydroxylamino oder Hydrazino.

Gegebenenfalls substituiertes Phenyl ist vorzugsweise Phenyl, das unsubstituiert oder ein- oder mehrfach, vorzugsweise bis zu dreifach durch gleiche oder verschiedene Reste aus der Gruppe Halogen, (C₁-C₄)Alkyl, (C₁-C₄)Alkoxy, (C₁-C₄)Halogenalkyl, (C₁-C₄)Halogenalkoxy und Nitro substituiert ist, z.B. o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.

Ein Acylrest bedeutet den Rest einer organischen Säure, z.B. den Rest einer Carbonsäure und Reste davon abgeleiteter Säuren wie der Thiocarbonsäure, gegebenenfalls N-substituierter Iminocarbonsäuren, oder der Rest von Kohlensäuremonoestern, gegebenenfalls N-substituierter Carbaminsäure, Sulfonsäuren, Sulfinsäuren, Phosphonsäuren, Phosphinsäuren. Acyl bedeutet beispielsweise Formyl, Alkylcarbonyl wie (C₁-C₄-Alkyl)-carbonyl, Phenylcarbonyl, wobei der Phenylring substituiert sein kann, z.B. wie oben für Phenyl gezeigt, oder Alkyloxycarbonyl, Phenyloxycarbonyl, Benzyloxycarbonyl, Alkylsulfonyl, Alkylsulfinyl, N-Alkyl-1-iminoalkyl und andere Reste von organischen Säuren.

Von den Formeln (A), (B1) und (B2) umfaßt sind auch alle Stereoisomeren, welche die gleiche topologische Verknüpfung der Atome aufweisen, und deren Gemische. Solche Verbindungen enthalten ein oder mehrere asymmetrische C-Atome oder auch Doppelbindungen, die in den allgemeinen Formeln nicht gesondert angegeben sind. Die durch ihre spezifische Raumform definierten möglichen Stereoisomeren, wie Enantiomere, Diastereomere, Z- und E-Isomere können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Die Verbindungen der Formel (A) können Salze bilden, bei denen der Wasserstoff der -SO₂-NH-Gruppe durch ein für die Landwirtschaft geeignetes Kation ersetzt wird. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen.

Die Verbindungen der Formel (B1) sind aus EP-A-333 131 (ZA-89/1960), EP-A-269 806 (US-A-4,891,057), EP-A-346 620 (AU-A-89/34951), EP-A-174 562, EP-A-346 620 und den internationalen Patentanmeldungen PCT/EP 90/01966 (WO-91/08202) und PCT/EP 90/02020 (WO-91/07874) sowie der deutschen Patentanmeldung P 43 31 448.1 (WO 95/07897 oder ZA 94/7120) und dort zitierter Literatur bekannt oder können nach oder analog den dort beschriebenen Verfahren hergestellt werden. Die Verbindungen der Formel (B2) sind aus EP-A-86 750, EP-A-94 349 (US-A-4,902,340), EP-A-191 736 (US-A-4,881,966) und EP-A-0 492 366 und dort zitierter Literatur bekannt oder können nach oder analog den dort beschriebenen Verfahren hergestellt werden. Einige Verbindungen sind ferner in EP-A-0 582 198 beschrieben.

Als herbizide Wirkstoffe eignen sich erfindungsgemäß solche Pyrimidin- bzw. Triazinderivate der Formel (A), die allein nicht oder nicht optimal in Getreidekulturen und/oder Mais eingesetzt werden können, weil sie die Kulturpflanzen zu stark schädigen.

Die Verbindungen der Formel (A) sind z.B. aus WO-A-94/06778, den deutschen Patentanmeldungen P 43 35 297.9 (PCT/EP 94/03369, WO 95/10507), P 44 15 049.0 und P 44 19 259.2 sowie WO-A-94/10154 (US-A-5 449 812) bekannt oder können analog den dort erwähnten Verfahren hergestellt werden.

Von besonderem Interesse sind erfindungsgemäße Herbizid-Safener-Kombinationen, wobei in den Safenern (B1) bzw. (B2)
- R⁷: Wasserstoff, (C₁-C₁₈)Alkyl, (C₃-C₁₂)Cycloalkyl, (C₂-C₈)Alkenyl oder (C₂-C₈)Alkinyl bedeutet, wobei die vorstehenden C-haltigen Reste unsubstituiert oder ein- oder mehrfach, vorzugsweise bis zu dreifach, durch gleiche oder verschiedene Reste aus der Gruppe enthaltend Halogen, Hydroxy, (C₁-C₈)Alkoxy, (C₁-C₈)Alkylmercapto, (C₂-C₈)Alkenylmercapto, (C₂-C₈)Alkinylmercapto, (C₂-C₈)Alkenyloxy, (C₂-C₈)Alkinyloxy, (C₃-C₇)Cycloalkyl, (C₃-C₇)Cycloalkoxy, Cyano, Mono- und Di-(C₁-C₄-alkyl)-amino, Carboxy, (C₁-C₈)Alkoxycarbonyl, (C₂-C₈)Alkenyloxycarbonyl, (C₁-C₈)Alkylmercaptocarbonyl, (C₂-C₈)Alkinyloxycarbonyl, (C₁-C₈)Alkylcarbonyl, (C₂-C₈)Alkenylcarbonyl, (C₂-C₈)Alkinylcarbonyl, 1-(Hydroxyimino)-(C₁-C₆)-alkyl, 1-[(C₁-C₄)Alkylimino]-(C₁-C₄)-alkyl, 1-[(C₁-C₄)Alkoxyimino]-(C₁-C₆)-alkyl, (C₁-C₈)Alkylcarbonylamino, (C₂-C₈)Alkenylcarbonylamino, (C₂-C₈)Alkinylcarbonylamino, Aminocarbonyl, (C₁-C₈)Alkylaminocarbonyl, Di-(C₁-C₆)-alkylaminocarbonyl, (C₂-C₆)Alkenylaminocarbonyl, (C₂-C₆)Alkinylaminocarbonyl, (C₁-C₈)Alkoxycarbonylamino, (C₁-C₈)Alkylaminocarbonylamino, (C₁-C₆)Alkylcarbonyloxy, das unsubstituiert oder durch Halogen, Nitro, (C₁-C₄)Alkoxy oder gegebenenfalls substituiertes Phenyl substituiert ist, (C₂-C₆)Alkenylcarbonyloxy, (C₂-C₆)Alkinylcarbonyloxy, (C₁-C₈)Alkylsulfonyl, Phenyl, Phenyl-(C₁-C₆)-alkoxy, Phenyl-(C₁-C₆)-alkoxycarbonyl, Phenoxy, Phenoxy-(C₁-C₆)-alkoxy, Phenoxy-(C₁-C₆)-alkoxycarbonyl, Phenylcarbonyloxy, Phenylcarbonylamino, Phenyl-(C₁-C₆)-alkylcarbonylamino, wobei die letztgenannten 9 Reste im Phenylring unsubstituiert oder ein- oder mehrfach, vorzugsweise bis zu dreifach durch gleiche oder verschiedene Reste aus der Gruppe Halogen, (C₁-C₄)Alkyl, (C₁-C₄)Alkoxy, (C₁-C₄)Halogenalkyl, (C₁-C₄)Halogenalkoxy und Nitro substituiert sind, und Reste der Formeln -SiR'₃, -O-SiR'₃, R'₃Si-(C₁-C₈)-alkoxy, -CO-O-NR'₂, -O-N = CR'₂, -N = CR'₂, -O-NR'₂, -NR'₂, CH(OR')₂, -O-(CH₂)ₘ-CH(OR')₂, -CR'''(OR')₂ und -O-(CH₂)ₘCR'''(OR'')₂, worin die R' in den genannten Formeln unabhängig voneinander Wasserstoff, (C₁-C₄)Alkyl, Phenyl, das unsubstituiert oder ein- oder mehrfach, vorzugsweise bis zu dreifach durch gleiche oder verschiedene Reste aus der Gruppe Halogen, (C₁-C₄)Alkyl, (C₁-C₄)Alkoxy, (C₁-C₄)Halogenalkyl, (C₁-C₄)Halogenalkoxy und Nitro substituiert ist, oder paarweise eine (C₂-C₆)Alkandiylkette und m = 0 bis 6 bedeuten und R''' Wasserstoff oder (C₁-C₄)Alkyl bedeutet, und einen substituierten Alkoxyrest der Formel R''O-CHR'''CH(OR'')-(C₁-C₆)-alkoxy, worin die R'' unabhängig voneinander (C₁-C₄)Alkyl oder zusammen (C₁-C₆)Alkandiyl und R''' Wasserstoff oder (C₁-C₄)Alkyl bedeuten, substituiert sind.

Von besonderem Interesse sind auch erfindungsgemäße Herbizid-Safener-Kombinationen, in welchen in den Safenern der Formel (B1) oder (B2)
- R⁷: Wasserstoff, (C₁-C₈)Alkyl oder (C₃-C₇)Cycloalkyl bedeutet, wobei die vorstehenden C-haltigen Reste unsubstituiert sind oder ein- oder mehrfach durch Halogen oder ein- oder zweifach, vorzugsweise bis zu einfach substituiert sind durch Reste aus der Gruppe Hydroxy, (C₁-C₄)Alkoxy, Carboxy, (C₁-C₄)Alkoxycarbonyl, (C₂-C₆)Alkenyloxycarbonyl, (C₂-C₆)Alkinyloxycarbonyl, 1-(Hydroxyimino)-(C₁-C₄)-alkyl, 1-[(C₁-C₄)Alkylimino]-(C₁-C₄)-alkyl, 1-[(C₁-C₄)Alkoxyimino]-(C₁-C₄)-alkyl und Reste der Formeln -SiR'₃, -O-N = CR'₂, -N = CR'₂, -NR'₂, und -O-NR'₂, worin die R' in den genannten Formeln unabhängig voneinander Wasserstoff oder (C₁-C₄)Alkyl oder paarweise eine (C₄-C₅)Alkandiylkette bedeuten,
- R⁹: Wasserstoff, (C₁-C₈)Alkyl, (C₁-C₆)Halogenalkyl, (C₃-C₇)Cycloalkyl oder Phenyl, das unsubstituiert oder durch einen oder mehrere der Reste aus der Gruppe Halogen, Cyano, Nitro, Amino, Mono- und Di-[(C₁-C₄)alkyl]amino, (C₁-C₄)Alkyl, (C₁-C₄)Haloalkyl, (C₁-C₄)Alkoxy, (C₁-C₄)Haloalkoxy, (C₁-C₄)Alkylthio und (C₁-C₄)Alkylsulfonyl substituiert ist, bedeutet und
- R¹⁰: Wasserstoff, (C₁-C₈)Alkyl, (C₁-C₈)Halogenalkyl, (C₁-C₄-Alkoxy)(C₁-C₄)-alkyl, (C₁-C₆)Hydroxyalkyl, (C₃-C₇)Cycloalkyl oder Tri-(C₁-C₄)-alkylsilyl bedeutet,
und/oder
- X': Wasserstoff, Halogen, Methyl, Ethyl, Methoxy, Ethoxy, (C₁ oder C₂)-Halogenalkyl, vorzugsweise Wasserstoff, Halogen oder (C₁ oder C₂)-Halogenalkyl bedeutet.

Bevorzugt sind dabei Safener,
in welchen in Formel (B1)
- X': Wasserstoff, Halogen, Nitro oder (C₁-C₄)Halogenalkyl bedeutet,
- n': 1, 2 oder 3 ist,
- Z': einen Rest der Formel OR⁷ bedeutet,
- R⁷: Wasserstoff, (C₁-C₈)Alkyl oder (C₃-C₇)Cycloalkyl bedeutet, wobei die vorstehenden C-haltigen Reste unsubstituiert sind oder ein- oder mehrfach, vorzugsweise bis zu dreifach durch gleiche oder verschiedene Halogen-Reste oder bis zu zweifach, vorzugsweise bis zu einfach, durch gleiche oder verschiedene Reste aus der Gruppe Hydroxy, (C₁-C₄)Alkoxy, (C₁-C₄)Alkoxycarbonyl, (C₂-C₆)Alkenyloxycarbonyl, (C₂-C₆)Alkinyloxycarbonyl, 1-(Hydroxyimino)-(C₁-C₄)-alkyl, 1-[(C₁-C₄)Alkylimino]-(C₁-C₄)-alkyl, 1-[(C₁-C₄)Alkoxyimino]-(C₁-C₄)-alkyl und Reste der Formeln -SiR'₃, -O-N = R'₂, -N = CR'₂, -NR'₂ und -O-NR'₂ substituiert sind, wobei die Reste R' in den genannten Formeln unabhängig voneinander Wasserstoff oder (C₁-C₄)Alkyl bedeuten oder diese paarweise für (C₄ oder C₅)Alkandiyl stehen,
- R⁹: Wasserstoff, (C₁-C₈)Alkyl, (C₁-C₆)Halogenalkyl, (C₃-C₇)Cycloalkyl oder Phenyl, das unsubstituiert oder durch einen oder mehrere der Reste aus der Gruppe Halogen, (C₁-C₄)Alkyl, (C₁-C₄)Alkoxy, Nitro, (C₁-C₄)Haloalkyl und (C₁-C₄)Haloalkoxy substituiert ist, bedeutet und
- R¹⁰: Wasserstoff, (C₁-C₈)Alkyl, (C₁-C₈)Halogenalkyl, (C₁-C₄)Alkoxy-(C₁-C₄)alkyl, (C₁-C₆)Hydroxyalkyl, (C₃-C₇)Cycloalkyl oder Tri-(C₁-C₄)-alkylsilyl bedeutet.

Bevorzugt sind dabei auch Safener,
in welchen in Formel (B2)
- X': Wasserstoff, Halogen oder (C₁-C₄)Halogenalkyl bedeutet,
- n': 1, 2 oder 3 ist, wobei (X')_{n'}, vorzugsweise 5-Cl ist,
- Z': einen Rest der Formel OR⁷ bedeutet,
- R*: CH₂ bedeutet und
- R⁷: Wasserstoff, (C₁-C₈)Alkyl, (C₁-C₈)Halogenalkyl oder (C₁-C₄)Alkoxy-(C₁-C₄)-alkyl, vorzugsweise (C₁-C₈)Alkyl bedeutet.

Besonders bevorzugt sind dabei Safener,
in welchen in Formel (B1)
- W': (W1) bedeutet,
- X': Wasserstoff, Halogen oder (C₁-C₂)Halogenalkyl bedeutet,
- n': 1, 2 oder 3 ist, wobei (X')_{n'}, vorzugsweise 2,4-Cl₂ ist,
- Z': einen Rest der Formel OR⁷ bedeutet,
- R⁷: Wasserstoff, (C₁-C₈)Alkyl, (C₁-C₄)Halogenalkyl, (C₁-C₄)Hydroxyalkyl, (C₃-C₇)Cycloalkyl, (C₁-C₄)Alkoxy-(C₁-C₄)-alkyl, Tri-(C₁-C₂)-alkylsilyl, vorzugsweise (C₁-C₄)Alkyl bedeutet,
- R⁹: Wasserstoff, (C₁-C₈)Alkyl, (C₁-C₄)Halogenalkyl oder (C₃-C₇)Cycloalkyl, vorzugsweise Wasserstoff oder (C₁-C₄)Alkyl bedeutet und
- R¹⁰: Wasserstoff, (C₁-C₈)Alkyl, (C₁-C₄)Halogenalkyl, (C₁-C₄)Hydroxyalkyl, (C₃-C₇)Cycloalkyl, (C₁-C₄)Alkoxy-(C₁-C₄)-alkyl oder Tri-(C₁-C₂)-alkylsilyl, vorzugsweise Wasserstoff oder (C₁-C₄)Alkyl bedeutet.

Besonders bevorzugt sind auch herbizide Mittel,
in welchen in Formel (B1)
- W': (W2) bedeutet,
- X': Wasserstoff, Halogen oder (C₁-C₂)Halogenalkyl bedeutet,
- n': 1, 2 oder 3 ist, wobei (X')_{n'}, vorzugsweise 2,4-Cl₂ ist,
- Z': einen Rest der Formel OR⁷ bedeutet,
- R⁷: Wasserstoff, (C₁-C₈)Alkyl, (C₁-C₄)Halogenalkyl, (C₁-C₄)Hydroxyalkyl, (C₃-C₇)Cycloalkyl, (C₁-C₄-Alkoxy)-C₁-C₄-alkyl, Tri-(C₁-C₂)-alkyl-silyl, vorzugsweise (C₁-C₄)Alkyl bedeutet und
- R⁹: Wasserstoff, (C₁-C₈)Alkyl, (C₁-C₄)Halogenalkyl, (C₃-C₇)Cycloalkyl oder Phenyl, vorzugsweise Wasserstoff oder (C₁-C₄)Alkyl bedeutet.

Besonders bevorzugt sind dabei auch Safener,
in welchen in Formel (B1)
- W': (W3) bedeutet,
- X': Wasserstoff, Halogen oder (C₁-C₂)Halogenalkyl bedeutet,
- n': 1, 2 oder 3 ist, wobei (X')_{n'}, vorzugsweise 2,4-Cl₂ ist,
- Z': einen Rest der Formel OR⁷ bedeutet,
- R⁷: Wasserstoff, (C₁-C₈)Alkyl, (C₁-C₄)Halogenalkyl, (C₁-C₄)Hydroxyalkyl, (C₃-C₇)Cycloalkyl, (C₁-C₄)Alkoxy-(C₁-C₄)-alkyl, Tri-(C₁-C₂)-alkylsilyl, vorzugsweise (C₁-C₄)Alkyl bedeutet und
- R⁹: (C₁-C₈)Alkyl oder (C₁-C₄)Halogenalkyl, vorzugsweise C₁-Halogenalkyl bedeutet.

Besonders bevorzugt sind dabei auch Safener,
in welchen in Formel (B1)
- W': (W4) bedeutet,
- X': Wasserstoff, Halogen, Nitro, (C₁-C₄)Alkyl oder (C₁-C₂)Halogenalkyl, vorzugsweise CF₃, oder (C₁-C₄)Alkoxy bedeutet,
- n': 1, 2 oder 3 ist,
- m': 0 oder 1 ist,
- Z': einen Rest der Formel OR⁷ bedeutet und
- R⁷: Wasserstoff, (C₁-C₄)Alkyl, Carboxy-(C₁-C₄)-alkyl oder (C₁-C₄)Alkoxycarbonyl-(C₁-C₄)-alkyl, vorzugsweise (C₁-C₄)Alkoxy-CO-CH₂-, (C₁-C₄)Alkoxy-CO-C(CH₃)H-, HO-CO-CH₂- oder HO-CO-C(CH₃)H- und
- R⁹: H, (C₁-C₄)Alkyl, (C₁-C₄)Haloalkyl, (C₃-C₇)Cycloalkyl oder Phenyl, das unsubstituiert oder durch einen oder mehrere der Reste aus der Gruppe Halogen, (C₁-C₄)Alkyl, (C₁-C₄)Haloalkyl, Nitro, Cyano und (C₁-C₄)Alkoxy substituiert ist,
bedeutet.

Folgende Gruppen von Verbindungen sind beispielsweise als Safener für die oben erwähnten herbiziden Wirkstoffe (A) geeignet:
a) Verbindungen vom Typ der Dichlorphenylpyrazolin-3-carbonsäure (d.h. der Formel (B1), worin W' = W1 und (X')_{n'} = 2,4-Cl₂), vorzugsweise Verbindungen wie 1-(2,4-Dichlorphenyl)-5-(ethoxycarbonyl)-5-methyl-2-pyrazolin-3-carbonsäureethylester (B1-1), und verwandte Verbindungen, wie sie in der WO 91/07874 beschrieben sind,
b) Derivate der Dichlorphenylpyrazolcarbonsäure (d.h. der Formel (B1), worin W' = W2 und (X')_{n'} = 2,4-Cl₂), vorzugsweise Verbindungen wie 1-(2,4-Dichlorphenyl)-5-methyl-pyrazol-3-carbonsäureethylester (B1-2), 1-(2,4-Dichlorphenyl)-5-isopropyl-pyrazol-3-carbonsäureethylester (B1-3), 1-(2,4-Dichlorphenyl)-5-(1,1-dimethyl-ethyl)pyrazol-3-carbonsäureethyester (B1-4), 1-(2,4-Dichlorphenyl)-5-phenyl-pyrazol-3-carbonsäureethylester (B1-5) und verwandte Verbindungen, wie sie in EP-A-333 131 und EP-A-269 806 beschrieben sind.
c) Verbindungen vom Typ der Triazolcarbonsäuren (d.h. der Formel (B1), worin W' = W3 und (X')_{n'} = 2,4-Cl₂), vorzugsweise Verbindungen wie Fenchlorazol, d.h. 1-(2,4-Dichlorphenyl)-5-trichlormethyl-(1H)-1,2,4-triazol-3-carbonsäureethylester (B1-6), und verwandte Verbindungen (siehe EP-A-174 562 und EP-A-346 620);
d) Verbindungen vom Typ der 5-Benzyl- oder 5-Phenyl-2-isoxazolin-3-carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (B1-7) oder 5-Phenyl-2-isoxazolin-3-carbonsäureethylester (B1-8) und verwandte Verbindungen, wie sie in WO 91/08202 beschrieben sind, bzw. der 5,5-Diphenyl-2-isoxazolin-carbonsäureethylester (B1-9) oder -n-propylester (B1-10) oder der 5-(4-Fluorphenyl)-5-phenyl-2-isoxazolin-3-carbonsäureethylester (B1-11), wie sie in der deutschen Patentanmeldung P 43 31 448.1 (WO-A-95/07897) beschrieben sind.
e) Verbindungen vom Typ der 8-Chinolinoxyessigsäure, z.B. solche der Formel (B2), worin (X')_{n'} = 5-Cl, Wasserstoff, Z' = OR⁷, R* = CH₂, vorzugsweise Verbindungen wie
   (5-Chlor-8-chinolinoxy)-essigsäure-(1-methyl-hex-1-yl)-ester (B2-1),
   (5-Chlor-8-chinolinoxy)-essigsäure-(1,3-dimethyl-but-1-yl)-ester (B2-2),
   (5-Chlor-8-chinolinoxy)-essigsäure-4-allyl-oxy-butyester (B2-3),
   (5-Chlor-8-chinolinoxy)-essigsäure-1-allyloxy-prop-2-ylester (B2-4),
   (5-Chlor-8-chinolinoxy)-essigsäureethylester (B2-5),
   (5-Chlor-8-chinolinoxy)-essigsäuremethylester (B2-6),
   (5-Chlor-8-chinolinoxy)-essigsäureallylester (B2-7),
   (5-Chlor-8-chinolinoxy)-essigsäure-2-(2-propyliden-iminoxy)-1-ethylester (B2-8),
   (5-Chlor-8-chinolinoxy)-essigsäure-2-oxo-prop-1-ylester (B2-9)
   und verwandte Verbindungen, wie sie in EP-A-86 750, EP-A-94 349 und EP-A-191 736 oder EP-A-0 492 366 beschrieben sind.
f) Verbindungen vom Typ der (5-Chlor-8-chinolinoxy)-malonsäure, d.h. der Formel (B2), worin (X')_{n'} = 5-Cl, Z' = OR⁷, R* = -CH(COO-Alkyl)-, vorzugsweise Verbindungen wie (5-Chlor-8-chinolinoxy)-malonsäurediethylester, (5-Chlor-8-chinolinoxy)-malonsäurediallylester, (5-Chlor-8-chinolinoxy)-malonsäure-methyl-ethylester und verwandte Verbindungen, wie sie in EP-A-0 582 198 beschrieben sind.
g) Wirkstoffe vom Typ der Phenoxyessig- bzw. -propionsäurederivate bzw. der aromatischen Carbonsäuren, wie z.B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba).

Von besonderem Interesse sind erfindungsgemäße Herbizid-Safener-Kombinationen, worin in Verbindungen der Formel (A) oder deren Salzen
- R¹: einen aliphatischen Kohlenwasserstoffrest mit bis zu 24 C-Atomen, der unsubstituiert oder substituiert ist, vorzugsweise (C₁-C₆)Alkyl, (C₂-C₆)Alkenyl, (C₂-C₆)Alkinyl, (C₃-C₆)Cycloalkyl, wobei jeder der vier letztgenannten Reste unsubstituiert oder durch einen oder mehrere Reste aus der Gruppe Halogen, CN, (C₁-C₄)Alkoxy, (C₁-C₄)Alkylthio, (C₁-C₄)Haloalkoxy, Mono-(C₁-C₄-alkyl)-amino, Di-(C₁-C₄-alkyl)-amino, (C₁-C₄)Alkylsulfonyl, (C₁-C₄-alkyl)-aminocarbonyl, Di-(C₁-C₄-alkyl)-aminocarbonyl, Phenyl und substituiertes Phenyl substituiert ist, oder einen Rest des Typs Heterocyclyl oder Heterocyclyl-(C₁-C₄)alkyl mit 3 bis 7 Ringatomen, vorzugsweise einen Rest der Formeln A-1 bis A-13 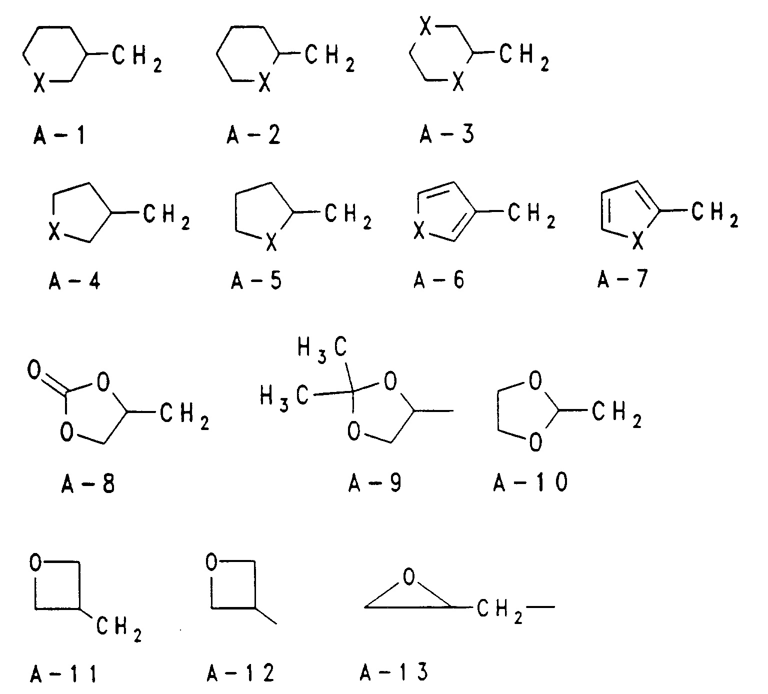
- X: O, S, S(O) oder SO₂, vorzugsweise O,
- R²: H, OH, einen aliphatischen Kohlenwasserstoffrest- oder Kohlenwasserstoffoxyrest, der unsubstituiert oder substituiert ist und insgesamt bis zu 18, vorzugsweise bis zu 12, insbesondere bis zu 8 C-Atome enthält,
vorzugsweise H, OH, (C₁-C₆)Alkyl, (C₃-C₇)Cycloalkyl, (C₂-C₆)Alkenyl, (C₂-C₆)Alkinyl, (C₁-C₆)Alkoxy, (C₃-C₇)Cycloalkoxy, (C₂-C₆)Alkenyloxy, (C₂-C₆)Alkinyloxy, wobei die acht letztgenannten Reste unsubstituiert oder durch einen oder mehrere Reste aus der Gruppe (C₁-C₄)Alkoxy, (C₁-C₄)Haloalkoxy, (C₂-C₄)Alkenyloxy, (C₂-C₄)Haloalkenyloxy, (C₂-C₄)Alkinyloxy, (C₂-C₄)Haloalkinyloxy, (C₁-C₄)Alkylthio, (C₁-C₄)Haloalkylthio, Halogen, OH, NH₂, Mono- und Di-[(C₁-C₄)alkyl]amino, CN, NO₂, CONH₂, CHO, [(C₁-C₆)Alkyl]-carbonyl, (C₁-C₄)Alkylsulfonyl, [(C₁-C₄)Alkoxy]-carbonyl, Mono- und Di-[(C₁-C₄)alkyl]-aminocarbonyl, sowie im Falle cyclischer Reste auch (C₁-C₄)Alkyl und (C₁-C₄)Haloalkyl substituiert sind,
- R³: CO-R¹¹, CO-OR¹², CO-NR¹³R¹⁴, CO-SR¹⁵, CS-R¹⁶, CS-OR¹⁷, CS-NR¹⁸R¹⁹, CS-SR²⁰, SO₂R²¹, SO₂NR²²R²³,
- R¹¹: H, (C₁-C₆)Alkyl, (C₂-C₆)Alkenyl, (C₂-C₆)Alkinyl, wobei die drei letztgenannten Reste unabhängig voneinander unsubstituiert oder durch einen oder mehrere Reste aus der Gruppe Halogen, (C₁-C₄)Alkoxy, (C₁-C₄)Alkylthio und NR²⁴R²⁵ substituiert sind, oder unsubstituiertes oder substituiertes (C₃-C₈)Cycloalkyl, unsubstituiertes oder substituiertes Phenyl, unsubstituiertes oder substituiertes Heteroaryl oder Phenyl(C₁-C₄)alkyl, das am Phenylring unsubstituiert oder substituiert ist,
- R¹²: (C₁-C₆)Alkyl, (C₂-C₆)Alkenyl, (C₂-C₆)Alkinyl, wobei die drei letztgenannten Reste unabhängig voneinander unsubstituiert oder durch einen oder mehrere Reste aus der Gruppe Halogen, (C₁-C₄)Alkoxy, (C₁-C₄)Alkylthio und NR²⁶R²⁷ substituiert sind, oder (C₃-C₆)Cycloalkyl, das unsubstituiert oder durch einen oder mehrere Reste aus der Gruppe Halogen, (C₁-C₄)Alkyl und (C₁-C₄)Alkoxy substituiert ist, oder (C₃-C₆)Cycloalkyl-(C₁-C₃)alkyl,
- R¹³: H, (C₁-C₆)Alkyl, (C₂-C₆)Alkenyl, (C₂-C₆)Alkinyl, wobei die drei letztgenannten Reste unabhängig voneinander unsubstituiert oder durch einen oder mehrere Reste aus der Gruppe Halogen substituiert sind, oder [(C₁-C₆)Alkoxy]-carbonyl, (C₁-C₄)Alkoxy oder OH,
- R¹⁴: H, (C₁-C₆)Alkyl, (C₂-C₆)Alkenyl, (C₂-C₆)Alkinyl, wobei die drei letztgenannten Reste unabhängig voneinander unsubstituiert oder durch einen oder mehrere Reste aus der Gruppe Halogen, (C₁-C₄)Alkxoy, (C₁-C₄)Alkylthio und NR²⁸R²⁹ substituiert sind,
- oder NR¹³R¹⁴: einen heterocyclischen Rest, der neben dem N-Atom weitere Heteroeinheiten aus der Gruppe O, N, S, SO oder SO₂ im Ringgerüst enthalten kann, und der unsubstituiert oder durch einen oder mehrere Reste aus der Gruppe Halogen, OH, NH₂, NHCH₃, N(CH₃)₂, CN, CONHCH₃, CO₂CH₃, COCH₃, CON(CH₃)₂, CHO, (C₁-C₃)Alkyl, CONH₂, (C₁-C₃)Alkoxy, (C₁-C₃)Haloalkoxy, (C₁-C₃)Haloalkyl und der Oxofunktion substituiert ist,
- R¹⁵: einen Rest analog R¹²,
- R¹⁶: einen Rest analog R¹¹,
- R¹⁷: einen Rest analog R¹²,
- R¹⁸: einen Rest analog R¹³,
- R¹⁹: einen Rest analog R¹⁴,
- oder NR¹⁸R¹⁹: einen Rest analog NR¹³R¹⁴,
- R²⁰: einen Rest analog R¹²,
- R²¹: (C₁-C₆)Alkyl, (C₂-C₆)Alkenyl, (C₂-C₆)Alkinyl, wobei die drei letztgenannten Reste unabhängig voneinander unsubstituiert oder durch einen oder mehrere Reste aus der Gruppe Halogen, (C₁-C₄)Alkoxy, (C₁-C₄)Alkylthio und NR³⁰R³¹ substituiert sind,
- R²²: einen Rest analog R¹³,
- R²³: einen Rest analog R¹⁴ oder
- NR²²R²³: einen Rest analog NR¹³R¹⁴,
- R²⁴: H, (C₁-C₄)Alkyl, (C₁-C₄)Haloalkyl, (C₁-C₄)Alkenyl, (C₁-C₄)Haloalkenyl, (C₁-C₄)Alkoxy, (C₁-C₄)Haloalkoxy, oder Hydroxy,
- R²⁵: H, (C₁-C₄)Alkyl, (C₁-C₄)Haloalkyl, (C₁-C₄)Alkenyl oder (C₁-C₄)Haloalkenyl,
- R²⁶: analog R²⁴,
- R²⁷: analog R²⁵,
- R²⁸: analog R²⁴,
- R²⁹: analog R²⁵,
- R³⁰: analog R²⁴ und
- R³¹: analog R²⁵
bedeuten.

Der Begriff "analog" in einer Definition wie "R¹⁵ einen Rest analog R¹² ... bedeutet" heißt, daß R¹⁵ und R¹² gleiche oder verschiedene Reste bedeuten, wie sie in der Definition von R¹² aufgeführt sind.

Von besonderem Interesse sind auch erfindungsgemäße Herbizid-Safener-Kombinationen, wobei in den Verbindungen der Formel (A) und deren Salzen
- R¹: (C₁-C₆)Alkyl, (C₂-C₆)Alkenyl, (C₂-C₆)Alkinyl, (C₃-C₆)Cycloalkyl, wobei jeder der vier letztgenannten Reste unsubstituiert oder durch einen oder mehrere Reste aus der Gruppe F, Cl, Br, I, CN, OCH₃, OCF₃, N(CH₃)₂, SO₂CH₃, CO₂CH₃, CO₂N(CH₃)₂ und Phenyl substituiert ist, oder eine Gruppe der genannten Formeln A-1 bis A-13,
- R²: H, (C₁-C₄)Alkyl, (C₂-C₄)Alkenyl, (C₂-C₄)Alkinyl, (C₃-C₆)Cycloalkyl oder (C₁-C₄)Haloalkyl,
- R³: CO-R¹¹, CO-OR¹², CO-NR¹³R¹⁴ oder SO₂R²¹,
- R⁴: Halogen, (C₁-C₃)Alkyl oder (C₁-C₃)Alkoxy,
- n: 0 oder 1,
- m: 0 oder 1,
- R: ⁵ H oder CH₃,
- R¹¹: H, (C₁-C₆)Alkyl, (C₂-C₄)Alkenyl, (C₂-C₄)Alkinyl, (C₁-C₄)Haloalkyl, (C₁-C₄)Alkoxy-(C₁-C₄)-alkyl, Phenyl oder Heteroaryl mit 5 oder 6 Ringatomen, wobei jeder der zwei letztgenannten Reste unsubstituiert oder substituiert ist,
- R¹²: einen Rest analog R¹¹, außer Wasserstoff,
- R¹³, R¹⁴: unabhängig voneinander H oder (C₁-C₄)Alkyl,
- R²¹: (C₁-C₄)Alkyl, (C₁-C₄)Haloalkyl oder (C₁-C₄)Alkoxy-(C₁-C₄)alkyl, einer der Reste X¹ und X² Halogen, (C₁-C₂)Alkyl, (C₁-C₂)Alkoxy, (C₁-C₂)Alkylthio,
wobei jeder der drei letztgenannten Reste unsubstituiert oder durch einen oder mehrere Reste aus der Gruppe Halogen, (C₁-C₂)Alkoxy und (C₁-C₂)Alkylthio substituiert ist, oder Mono- oder Di(C₁-C₂-alkyl)amino, vorzugsweise Halogen, Methyl oder Methoxy, und
der andere der Reste X¹ und X² (C₁-C₂)Alkyl, (C₁-C₂)Haloalkyl, (C₁-C₂)Alkoxy, (C₁-C₂)Haloalkoxy oder (C₁-C₂)Alkylthio, vorzugsweise Methyl oder Methoxy,
- Z: CH oder N bedeuten.

Bevorzugt sind erfindungsgemäße Verbindungen der Formel (I) und deren Salze, worin
- R¹: (C₁-C₄)Alkyl, vorzugsweise Methyl oder Ethyl,
- R²: H, (C₁-C₄)Alkyl, vorzugsweise Methyl oder Ethyl,
- R³: Formyl, Acetyl, n-Propionyl, i-Propionyl, 2-Methyl-propionyl, n-Butanoyl, Cyclopropylcarbonyl, Methoxycarbonyl, Ethoxycarbonyl, Trifluoracetyl, Methylsulfonyl,
- m: 0 oder 1,
- n: Null,
- R⁵: Wasserstoff,
- A: CH₂,
- Q: ein Sauerstoffatom oder N(CH₃),
- X¹: OCH₃, OC₂H₅ oder Cl,
- X²: OCH₃ oder OC₂H₅,
- Z: CH oder N
bedeuten.

Die Safener (Antidote) der Formeln (B1) und (B2), beispielsweise Safener der obengenannten Gruppen a) bis g), reduzieren oder unterbinden phytotoxische Effekte, die beim Einsatz der herbiziden Wirkstoffe der Formel (A) in Nutzpflanzenkulturen auftreten können, ohne die Wirksamkeit dieser herbiziden Wirkstoffe gegen Schadpflanzen wesentlich zu beeinträchtigen. Hierdurch kann das Einsatzgebiet herkömmlicher Pflanzenschutzmittel ganz erheblich erweitert und z.B. auf Kulturen wie Weizen, Gerste, Mais und andere Gramineen-Kulturen ausgedehnt werden, in denen bisher ein Einsatz der Herbizide nicht möglich oder nur beschränkt, das heißt, in niedrigen Dosierungen mit wenig Breitenwirkung möglich war.

Die herbiziden Wirkstoffe und die erwähnten Safener können zusammen (als fertige Formulierung oder im Tank-mix-Verfahren) oder in beliebiger Reihenfolge nacheinander ausgebracht werden. Das Gewichtsverhältnis Safener: herbizider Wirkstoff kann innerhalb weiter Grenzen variieren und ist vorzugsweise im Bereich von 1:100 bis 100:1, insbesondere von 1:10 bis 10:1. Die jeweils optimalen Mengen an herbizidem Wirkstoff und Safener sind vom Typ des verwendeten herbiziden Wirkstoffs oder vom verwendeten Safener sowie von der Art des zu behandelnden Pflanzenbestandes abhängig und lassen sich von Fall zu Fall durch entsprechende Vorversuche ermitteln.

Haupteinsatzgebiete für die Anwendung der Safener sind vor allem Mais und Getreidekulturen (Weizen, Roggen, Gerste, Hafer), Reis, Sorghum, aber auch Baumwolle und Sojabohne, vorzugsweise Getreide und Mais.

Die Safener der Formeln (B1) und (B2) können je nach ihren Eigenschaften zur Vorbehandlung des Saatgutes der Kulturpflanze (Beizung der Samen) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit dem Herbizid. Hierzu können Tankmischungen oder Fertigformulierungen eingesetzt werden.

Die benötigten Aufwandmengen der Safener können je nach Indikation und verwendetem herbiziden Wirkstoff innerhalb weiter Grenzen schwanken und sind in der Regel im Bereich von 0,001 bis 5 kg, vorzugsweise 0,005 bis 0,5 kg Wirkstoff je Hektar.

Gegenstand der vorliegenden Erfindung ist deshalb auch ein Verfahren zum Schutz von Kulturpflanzen vor phytotoxischen Nebenwirkungen von Herbiziden der Formel (A), das dadurch gekennzeichnet ist, daß eine wirksame Menge einer Verbindung der Formel (B1) und/oder (B2) vor, nach oder gleichzeitig mit dem herbiziden Wirkstoff der Formel (A) auf die Pflanzen, Pflanzensamen oder die Anbaufläche appliziert wird.

Die Verbindungen der Formeln (B1) und (B2) und deren Kombinationen mit einem oder mehreren der genannten herbiziden Wirkstoffe können auf verschiedene Art formuliert werden, je nachdem welche biologischen und/oder chemisch-physikalischen Parameter vorgegeben sind. Als Formulierungsmöglichkeiten kommen beispielsweise in Frage:
Spritzpulver (WP), emulgierbare Konzentrate (EC), wasserlösliche Pulver (SP), wasserlösliche Konzentrate (SL), konzentrierte Emulsionen (BW) wie Öl-in-Wasser und Wasser-in-Öl-Emulsionen, versprühbare Lösungen oder Emulsionen, Kapselsuspensionen (CS), Dispersionen auf Öl- oder Wasserbasis (SC), Suspoemulsionen, Suspensionskonzentrate, Stäubemittel (DP), ölmischbare Lösungen (OL), Beizmittel, Granulate (GR) in Form von Mikro-, Sprüh-, Aufzugs- und Adsorptionsgranulaten, Granulate für die Boden- bzw. Streuapplikation, wasserlösliche Granulate (SG), wasserdispergierbare Granulate (WG), ULV-Formulierungen, Mikrokapseln und Wachse.

Diese einzelnen Formulierungstypen sind im Prinzip bekannt und werden beispielsweise beschrieben in: Winnacker-Küchler, "Chemische Technologie" Band 7, C. Hauser Verlag München, 4. Aufl. 1986; Wade van Valkenburg, "Pesticide Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie z.B. Insektiziden, Akariziden, Herbiziden, Fungiziden, sowie mit Safenern, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Tenside ionischer und/oder nichtionischer Art (Netzmittel, Dispergiermittel), z.B. polyoxyethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten. Zur Herstellung der Spritzpulver werden die herbiziden Wirkstoffe beispielsweise in üblichen Apparaturen wie Hammermühlen, Gebläsemühlen und Luftstrahlmühlen feingemahlen und gleichzeitig oder anschließend mit den Formulierungshilfsmitteln vermischt.

Emulgierbare Konzentrate werden durch Auflösen des Wirkstoffes in einem organischen Lösungsmittel z.B. Butanol, Cyclohexanon, Dimethylformamid, Xylol oder auch höhersiedenden Aromaten oder Kohlenwasserstoffen oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calzium-Salze wie Ca-dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanester wie z.B. Sorbitanfettsäureester oder Polyoxethylensorbitanester wie z.B. Polyoxyethylensorbitanfettsäureester.

Stäubemittel erhält man durch Vermahlen des Wirkstoffes mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls Zusatz von Tensiden, wie sie z.B. oben bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischern unter Verwendung von wäßrigen organischen Lösungsmitteln und gegebenenfalls Tensiden, wie sie z.B. oben bei den anderen Formulierungstypen bereits aufgeführt sind, herstellen.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischern und Extrusion ohne festes Inertmaterial hergestellt.

Zur Herstellung von Teller-, Fließbett-, Extruder- und Sprühgranulate siehe z.B. Verfahren in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Zubereitungen enthalten in der Regel 0,1 bis 99 Gew.-%, insbesondere 0,1 bis 95 Gew.-%, Wirkstoffe der Formel (B1) und/oder (B2) oder des Herbizid/Antidot-Wirkstoffgemischs (A) und (B1) und/oder (B2) und 1 bis 99,9 Gew.-%, insbesondere 5 bis 99,8 Gew.-%, eines festen oder flüssigen Zusatzstoffes und 0 bis 25 Gew.-%, insbesondere 0,1 bis 25 Gew.-% eines Tensides.

In Spritzpulvern beträgt die Wirkstoffkonzentration z.B. etwa 10 bis 90 Gew.%, der Rest zu 100 Gew.-% besteht aus üblichen Formulierungsbestandteilen. Bei emulgierbaren Konzentraten beträgt die Wirkstoffkonzentration etwa 1 bis 80 Gew.-%. Staubförmige Formulierungen enthalten etwa 1 bis 20 Gew.-% an Wirkstoffen, versprühbare Lösungen etwa 0,2 bis 20 Gew.-% Wirkstoffe. Bei Granulaten wie wasserdispergierbaren Granulaten hängt der Wirkstoffgehalt zum Teil davon ab, ob die wirksame Verbindung flüssig oder fest vorliegt. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Konservierungs-, Frostschutz- und Lösungsmittel, Füll-, Träger- und Farbstoffe, Entschäumer, Verdunstungshemmer und den pH-Wert und die Viskosität beeinflussende Mittel.

Als Kombinationspartner für die erfindungsgemäßen Wirkstoffe in Mischungsformulierungen oder im Tank-Mix sind beispielsweise bekannte Wirkstoffe einsetzbar, wie sie in z.B. Weed Research 26, 441-445 (1986), oder "The Pesticide Manual", 9th edition, The British Crop Protection Council, 1990/91, Bracknell, England, und dort zitierter Literatur beschrieben sind. Als literaturbekannte Herbizide, die mit den Verbindungen der Formel (I) kombiniert werden können, sind z.B. folgende Wirkstoffe zu nennen (Anmerkung: Die Verbindungen sind entweder mit dem "common name" nach der International Organization for Standardization (ISO) oder mit dem chemischen Namen, ggf. zusammen mit einer üblichen Codenummer bezeichnet):
acetochlor; acifluorfen; aclonifen; AKH 7088, d.h. [[[1-[5-[2-Chloro-4-(trifluoromethyl)-phenoxy]-2-nitrophenyl]-2-methoxyethylidene]-amino]-oxy]-essigsäure und -essigsäuremethylester; alachlor; alloxydim; ametryn; amidosulfuron; amitrol; AMS, d.h. Ammoniumsulfamat; anilofos; asulam; atrazin; azimsulfurone (DPX-A8947); aziprotryn; barban; BAS 516 H, d.h. 5-Fluor-2-phenyl-4H-3,1-benzoxazin-4-on; benazolin; benfluralin; benfuresate; bensulfuron-methyl; bensulide; bentazone; benzofenap; benzofluor; benzoylpropethyl; benzthiazuron; bialaphos; bifenox; bromacil; bromobutide; bromofenoxim; bromoxynil; bromuron; buminafos; busoxinone; butachlor; butamifos; butenachlor; buthidazole; butralin; butylate; cafenstrole (CH-900); carbetamide; cafentrazone (ICI-A0051); CDAA, d.h. 2-Chlor-N,N-di-2-propenylacetamid; CDEC, d.h. Diethyldithiocarbaminsäure-2-chlorallylester; chlomethoxyfen; chloramben; chlorazifop-butyl, chlormesulon (ICI-A0051); chlorbromuron; chlorbufam; chlorfenac; chlorflurecol-methyl; chloridazon; chlorimuron ethyl; chlornitrofen; chlorotoluron; chloroxuron; chlorpropham; chlorsulfuron; chlorthal-dimethyl; chlorthiamid; cinmethylin; cinosulfuron; clethodim; clodinafop und dessen Esterderivate (z.B. clodinafop-propargyl); clomazone; clomeprop; cloproxydim; clopyralid; cumyluron (JC 940); cyanazine; cycloate; cyclosulfamuron (AC 104); cycloxydim; cycluron; cyhalofop und dessen Esterderivate (z.B. Butylester, DEH-112); cyperquat; cyprazine; cyprazole; daimuron; 2,4-DB; dalapon; desmedipham; desmetryn; di-allate; dicamba; dichlobenil; dichlorprop; diclofop und dessen Ester wie diclofop-methyl; diethatyl; difenoxuron; difenzoquat; diflufenican; dimefuron; dimethachlor; dimethametryn; dimethenamid (SAN-582H); dimethazone, clomazon; dimethipin; dimetrasulfuron, dinitramine; dinoseb; dinoterb; diphenamid; dipropetryn; diquat; dithiopyr; diuron; DNOC; eglinazine-ethyl; EL 177, d.h. 5-Cyano-1-(1,1-dimethylethyl)-N-methyl-1H-pyrazole-4-carboxamid; endothal; EPTC; esprocarb; ethalfluralin; ethametsulfuron-methyl; ethidimuron; ethiozin; ethofumesate; F5231, d.h. N-[2-Chlor-4-fluor-5-[4-(3-fluorpropyl)-4,5-dihydro-5-oxo-1H-tetrazol-1-yl]-phenyl]-ethansulfonamid; ethoxyfen und dessen Ester (z.B. Ethylester, HN-252); etobenzanid (HW 52); fenoprop; fenoxan, fenoxaprop und fenoxaprop-P sowie deren Ester, z.B. fenoxaprop-P-ethyl und fenoxaprop-ethyl; fenoxydim; fenuron; flamprop-methyl; flazasulfuron; fluazifop und fluazifop-P und deren Ester, z.B. fluazifop-butyl und fluazifop-P-butyl; fluchloralin; flumetsulam; flumeturon; flumiclorac und dessen Ester (z.B. Pentylester, S-23031); flumioxazin (S-482); flumipropyn; flupoxam (KNW-739); fluorodifen; fluoroglycofen-ethyl; flupropacil (UBIC-4243); fluridone; flurochloridone; fluroxypyr; flurtamone; fomesafen; fosamine; furyloxyfen; glufosinate; glyphosate; halosaten; halosulfuron und dessen Ester (z.B. Methylester, NC-319); haloxyfop und dessen Ester; haloxyfop-P (= R-haloxyfop) und dessen Ester; hexazinone; imazamethabenz-methyl; imazapyr; imazaquin und Salze wie das Ammoniumsalz; imazethamethapyr; imazethapyr; imazosulfuron; ioxynil; isocarbamid; isopropalin; isoproturon; isouron; isoxaben; isoxapyrifop; karbutilate; lactofen; lenacil; linuron; MCPA; MCPB; mecoprop; mefenacet; mefluidid; metamitron; metazachlor; methabenzthiazuron; metham; methazole; methoxyphenone; methyldymron; metabenzuron, methobenzuron; metobromuron; metolachlor; metosulam (XRD 511); metoxuron; metribuzin; metsulfuron-methyl; MH; molinate; monalide; monocarbamide dihydrogensulfate; monolinuron; monuron; MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyl]-2-methylpentanamid; naproanilide; napropamide; naptalam; NC 310, d.h. 4-(2,4-dichlorbenzoyl)-1-methyl-5-benzyloxypyrazol; neburon; nicosulfuron; nipyraclophen; nitralin; nitrofen; nitrofluorfen; norflurazon; orbencarb; oryzalin; oxadiargyl (RP-020630); oxadiazon; oxyfluorfen; paraquat; pebulate; pendimethalin; perfluidone; phenisopham; phenmedipham; picloram; piperophos; piributicarb; pirifenop-butyl; pretilachlor; primisulfuron-methyl; procyazine; prodiamine; profluralin; proglinazine-ethyl; prometon; prometryn; propachlor; propanil; propaquizafop und dessen Ester; propazine; propham; propisochlor; propyzamide; prosulfalin; prosulfocarb; prosulfuron (CGA-152005); prynachlor; pyrazolinate; pyrazon; pyrazosulfuron-ethyl; pyrazoxyfen; pyridate; pyrithiobac (KIH-2031); pyroxofop und dessen Ester (z.B. Propargylester); quinclorac; quinmerac; quinofop und dessen Esterderivate, quizalofop und quizalofop-P und deren Esterderivate z.B. quizalofop-ethyl; quizalofop-P-tefuryl und -ethyl; renriduron; rimsulfuron (DPX-E 9636); S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; SN 106279, d.h. 2-[[7-[2-Chlor-4-(trfluor-methyl)-phenoxy]-2-naphthalenyl]-oxy]-propansäure und -methylester; sulfentrazon (FMC-97285, F-6285); sulfazuron; sulfometuronmethyl; sulfosate (ICI-A0224); TCA; tebutam (GCP-5544); tebuthiuron; terbacil; terbucarb; terbuchlor; terbumeton; terbuthylazine; terbutryn; TFH 450, d.h. N,N-Diethyl-3-[(2-ethyl-6-methylphenyl)-sulfonyl]-1H-1,2,4-triazol-1-carboxamid; thenylchlor (NSK-850); thiazafluron; thizopyr (Mon-13200); thidiazimin (SN-124085); thifensulfuron-methyl; thiobencarb; tiocarbazil; tralkoxydim; tri-allate; triasulfuron; triazofenamide; tribenuron-methyl; triclopyr; tridiphane; trietazine; trifluralin; triflusulfuron und Ester (z.B. Methylester, DPX-66037); trimeturon; tsitodef; vernolate; WL 110547, d.h. 5-Phenoxy-1-[3-(trifluormethyl)-phenyl]-1H-tetrazol; UBH-509; D-489; LS 82-556; KPP-300; NC-324; NC-330; KH-218; DPX-N8189; SC-0774; DOWCO-535; DK-8910; V-53482; PP-600; MBH-001; KIH-9201; ET-751; KIH-6127 und KIH-2023.

Zur Anwendung werden die in handelsüblicher Form vorliegenden Formulierungen gegebenenfalls in üblicher Weise verdünnt z.B. bei Spritzpulvern, emulgierbaren Konzentraten, Dispersionen und wasserdispergierbaren Granulaten mittels Wasser. Staubförmige Zubereitungen, Boden- bzw. Streugranulate sowie versprühbare Lösungen werden vor der Anwendung üblicherweise nicht mehr mit weiteren inerten Stoffen verdünnt.

Mit den äußeren Bedingungen wie Temperatur, Feuchtigkeit, der Art des verwendeten Herbizids, u.a. variiert die erforderliche Aufwandmenge der erfindungsgemäßen Verbindungen der Formel (A). Sie kann innerhalb weiter Grenzen variiert werden, z.B. zwischen 0,001 und 10,0 kg/ha oder mehr Aktivsubstanz, vorzugsweise liegt sie jedoch zwischen 0,005 und 5 kg/ha.

Folgende Beispiele dienen zur Erläuterung der Erfindung:

### A. Formulierungsbeispiele

a) Ein Staubmittel wird erhalten, indem man 10 Gew.-Teile einer Verbindung der Formel (B1) und/oder (B2) oder eines Wirkstoffgemischs aus einem herbiziden Wirkstoff der Formel (A) und einem Safener der Formel (B1) und/oder (B2) und 90 Gew.-Teile Talkum als Inertstoff mischt und in einer Schlagmühle zerkleinert.
b) Ein in Wasser leicht dispergierbares, benetzbares Pulver wird erhalten, indem man 25 Gewichtsteile einer Verbindung der Formel (B1) und/oder (B2) oder eines Wirkstoffgemischs aus einem herbiziden Wirkstoff der Formel (A) und einem Safener der Formel (B1) und/oder (B2), 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares Dispersionskonzentrat wird erhalten, indem man 20 Gewichtsteile einer Verbindung der Formel (B1) und/oder (B2) oder eines Wirkstoffgemischs aus einem herbiziden Wirkstoff der Formel (A) und einem Safener der Formel (B1) und/oder (B2),
   6 Gew.-Teilen Alkylphenolpolyglykolether (®Triton X 207), 3 Gew.-Teilen Isotridecanolpolyglykolether (8 EO) und 71 Gew.- Teilen paraffinischem Mineralöl (Siedebereich z.B. ca. 255 bis über 277°C) mischt und in einer Reibkugelmühle auf eine Feinheit von unter 5 Mikron vermahlt.
d) Ein emulgierbares Konzentrat wird erhalten aus 15 Gew.-Teilen einer Verbindung der Formel (B1) und/oder (B2) oder eines Wirkstoffgemischs aus einem herbiziden Wirkstoff der Formel (A) und einem Safener der Formel (B1) und/oder (B2), 75 Gew.Teilen Cyclohexanon als Lösemittel und 10 Gew.-Teilen oxethyliertes Nonylphenol als Emulgator.
e) Ein in Wasser dispergierbares Granulat wird erhalten, indem man
   - 75 Gew.-Teile: einer Verbindung der Formel (B1) und/oder (B2) oder eines Wirkstoffgemischs aus einem herbiziden Wirkstoff der Formel (A) und einem Safener der Formel B1 und/oder B2,
   - 10 ": ligninsulfonsaures Calcium,
   - 5 ": Natriumlaurylsulfat,
   - 3 ": Polyvinylalkohol und
   - 7 ": Kaolin
   mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man
   - 25 Gew.-Teil(e): einer Verbindung der Formel (B1) und/oder (B2) oder eines Wirkstoffgemischs aus einem herbiziden Wirkstoff der Formel (A) und einem Safener der Formel (B1) und/oder (B2),
   - 5 ": 2,2'-dinaphthylmethan-6,6'-disulfonsaures Natrium,
   - 2 ": oleoylmethyltaurinsaures Natrium,
   - 1 ": Polyvinylalkohol,
   - 17 ": Calciumcarbonat und
   - 50 ": Wasser
   auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.

### Biologische Beispiele

### Beispiel 1

Verschiedene Kulturpflanzen werden im Gewächshaus in Plastiktöpfen von 9 cm Durchmesser bis zum angegebenen Stadium herangezogen und dann mit dem jeweiligen Herbizid bzw. mit einem Gemisch aus dem Herbizid und dem Safener im Nachlaufverfahren behandelt. Das Herbizid der Formel (A) und die Verbindungen der Formel (B) werden dabei in Form wäßriger Suspensionen bzw. Emulsionen mit einer Wasseraufwandmenge von umgerechnet 300 l/ha ausgebracht. 4 Wochen nach der Behandlung werden die Pflanzen visuell auf jede Art von Schädigung durch die ausgebrachten Herbizide bonitiert, wobei insbesondere das Ausmaß der anhaltenden Wachstumshemmung berücksichtigt wird. Die Bewertung erfolgt in Prozentwerten (Skala 0 bis 100 %) im Vergleich zu unbehandelten Kontrollen.

Die Ergebnisse der Versuche zeigen, daß verschiedene erfindungsgemäße Safener den selektiven Einsatz der Herbizide in Kulturen wie Weizen, Gerste und Mais ermöglichen, ohne dabei die herbizide Wirksamkeit negativ zu beeinflussen.

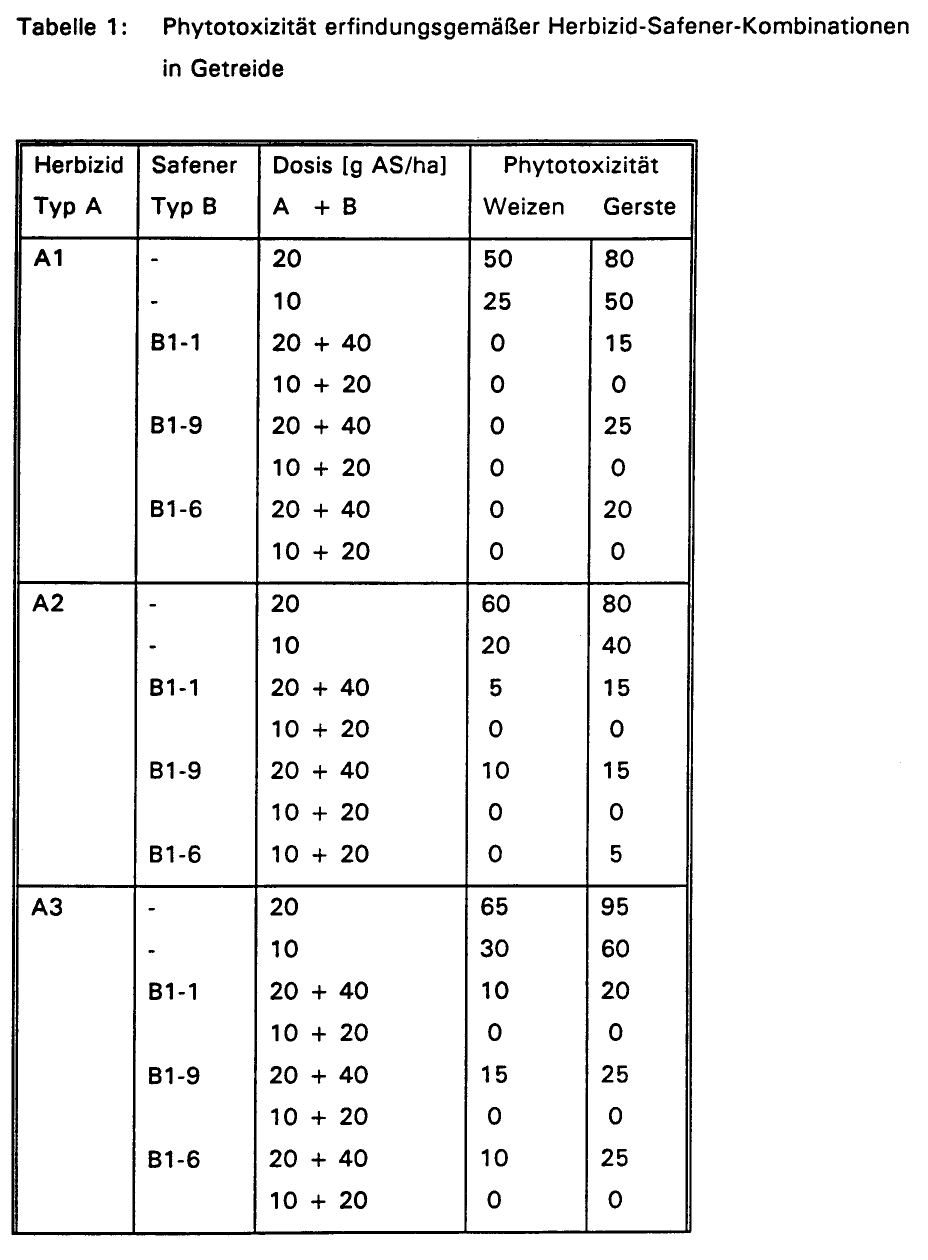

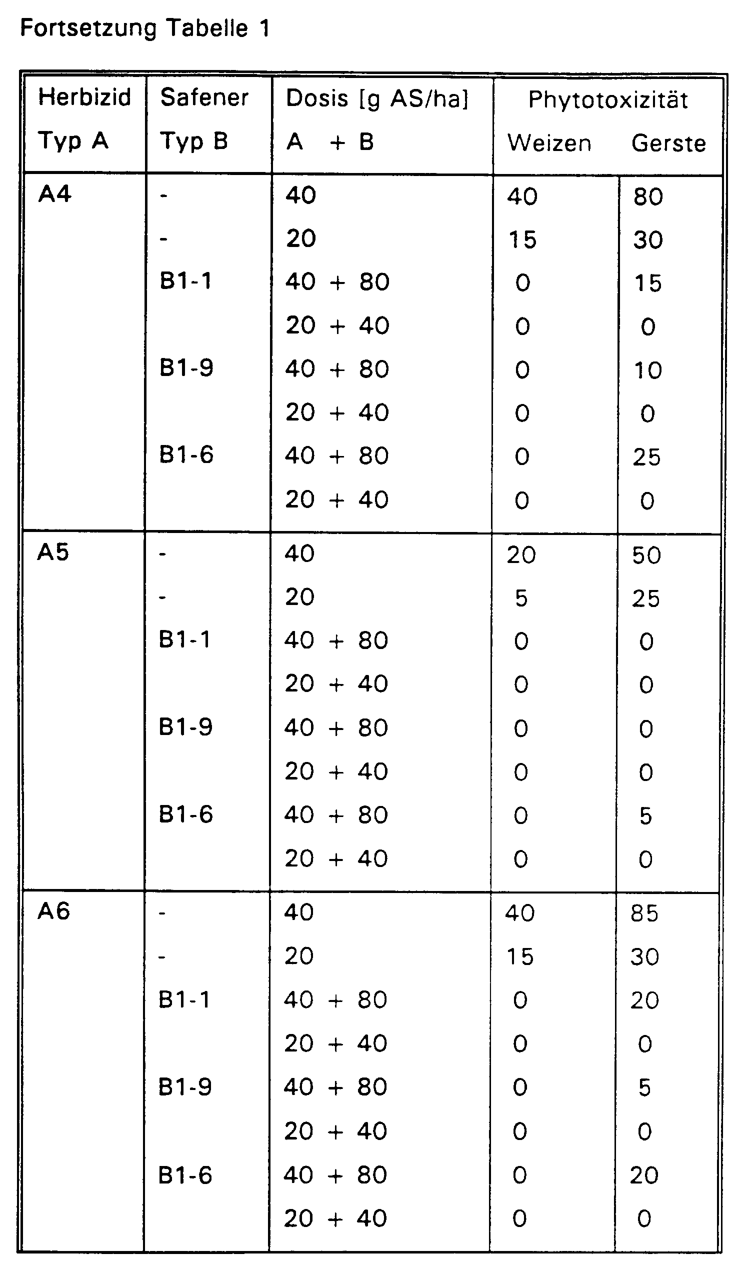

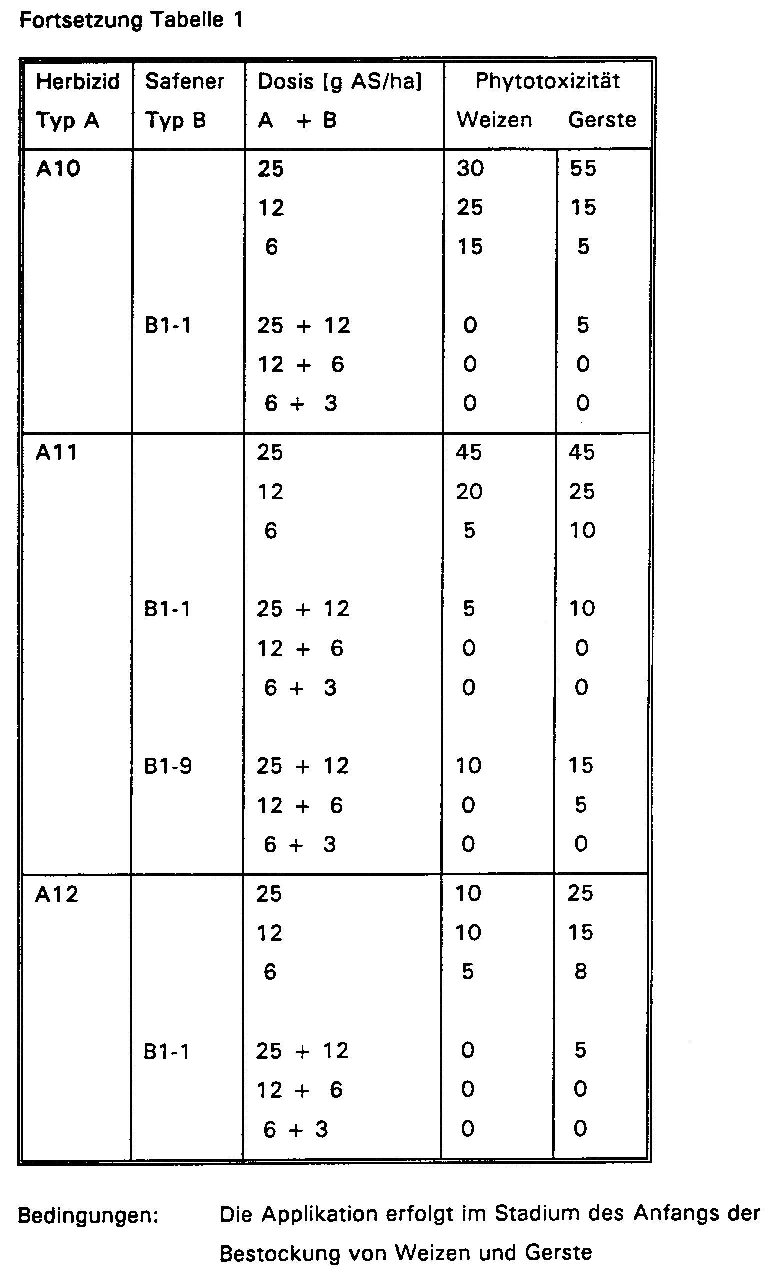

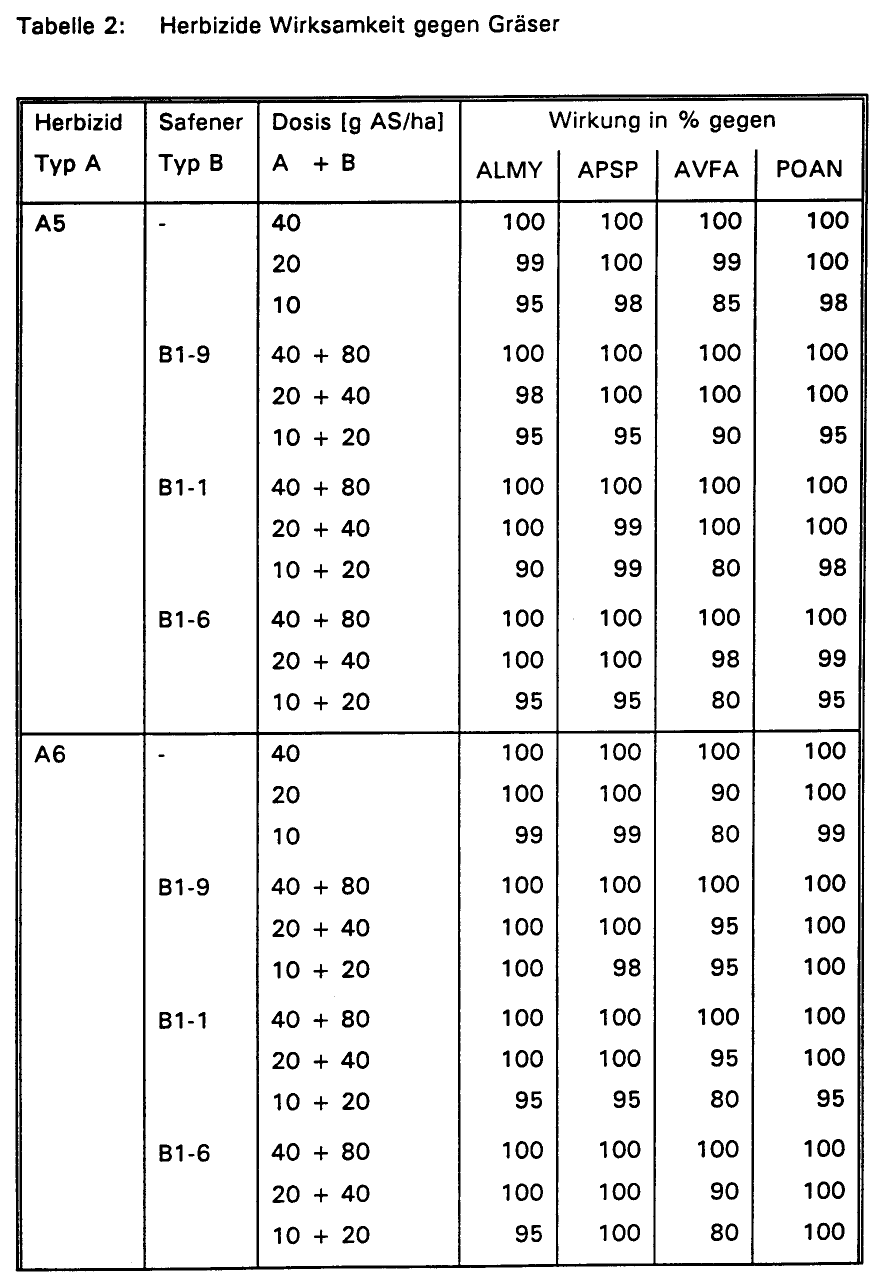

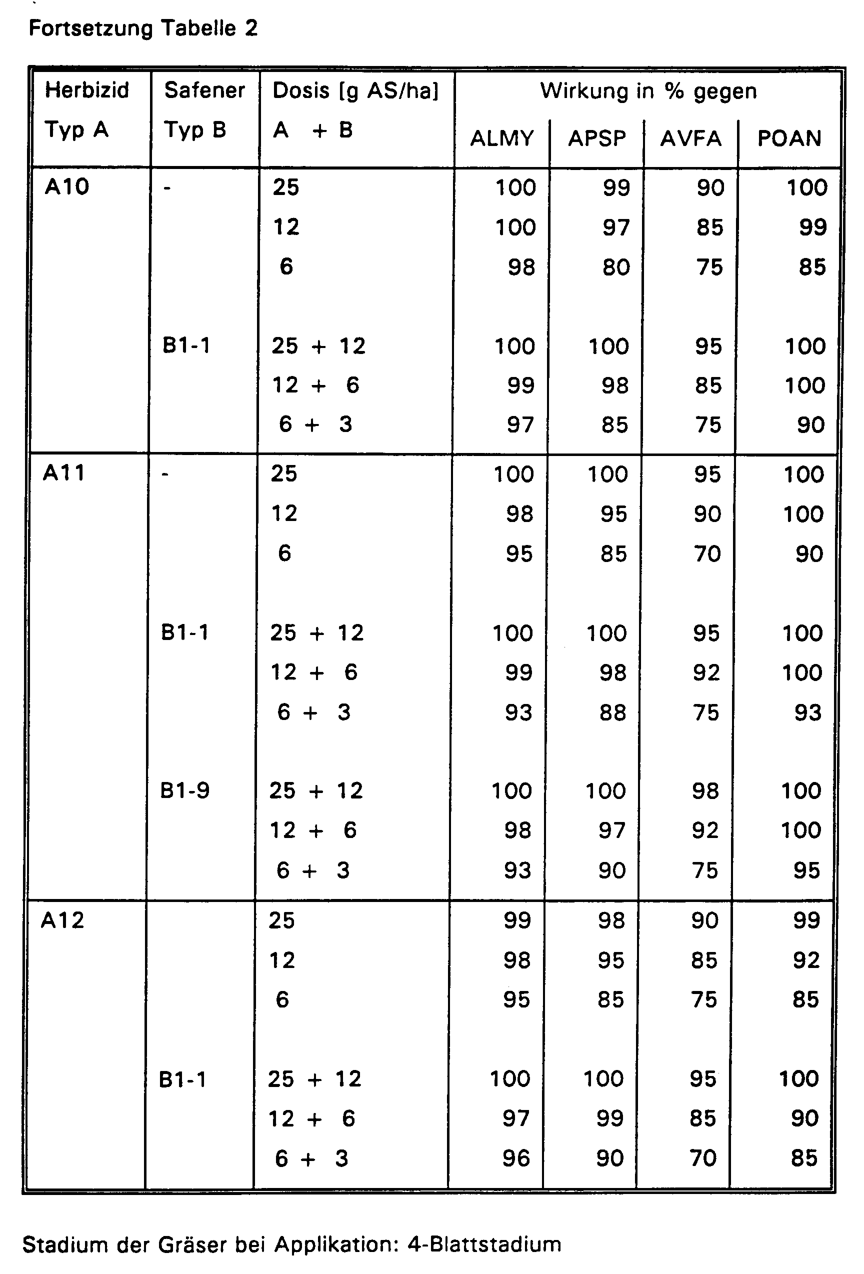

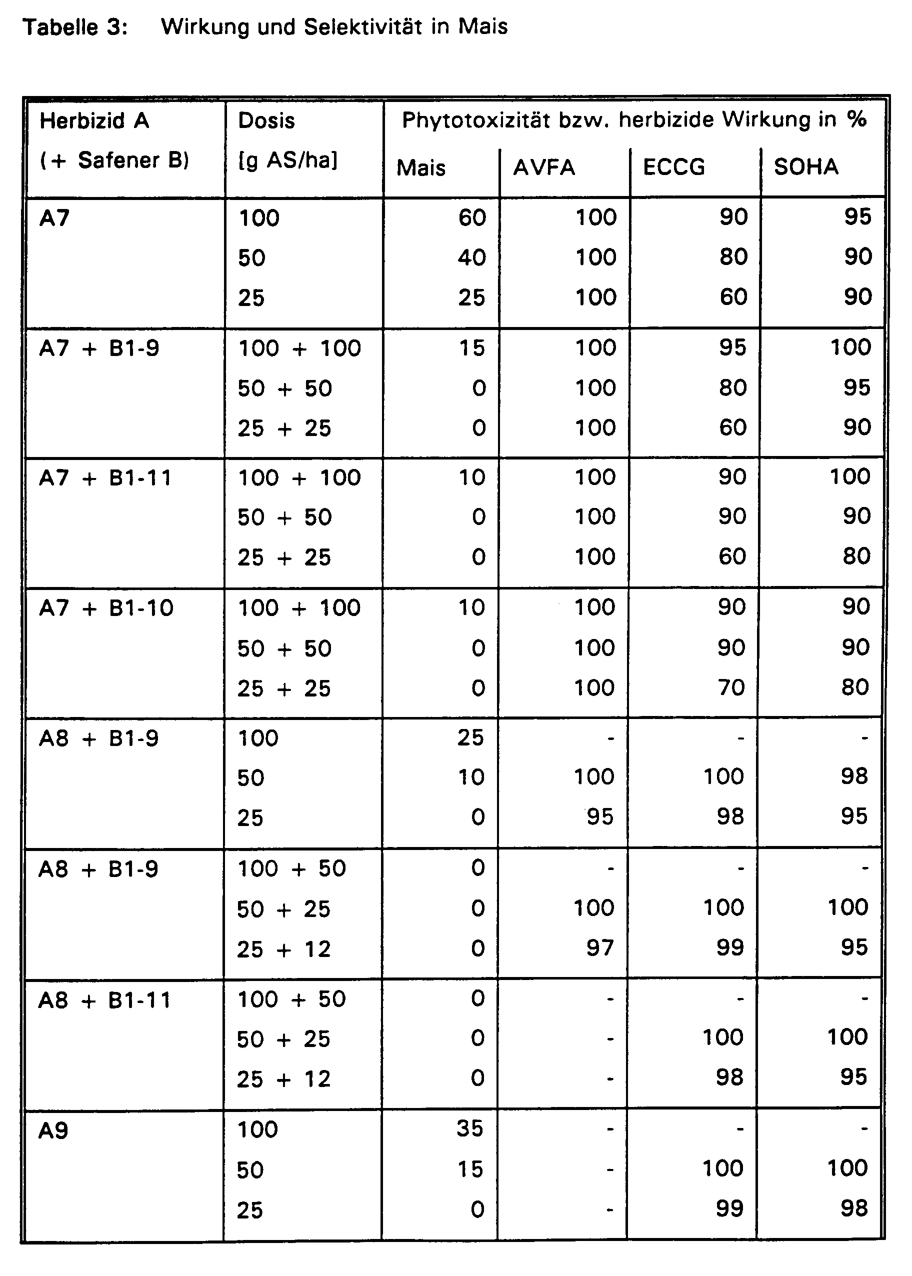

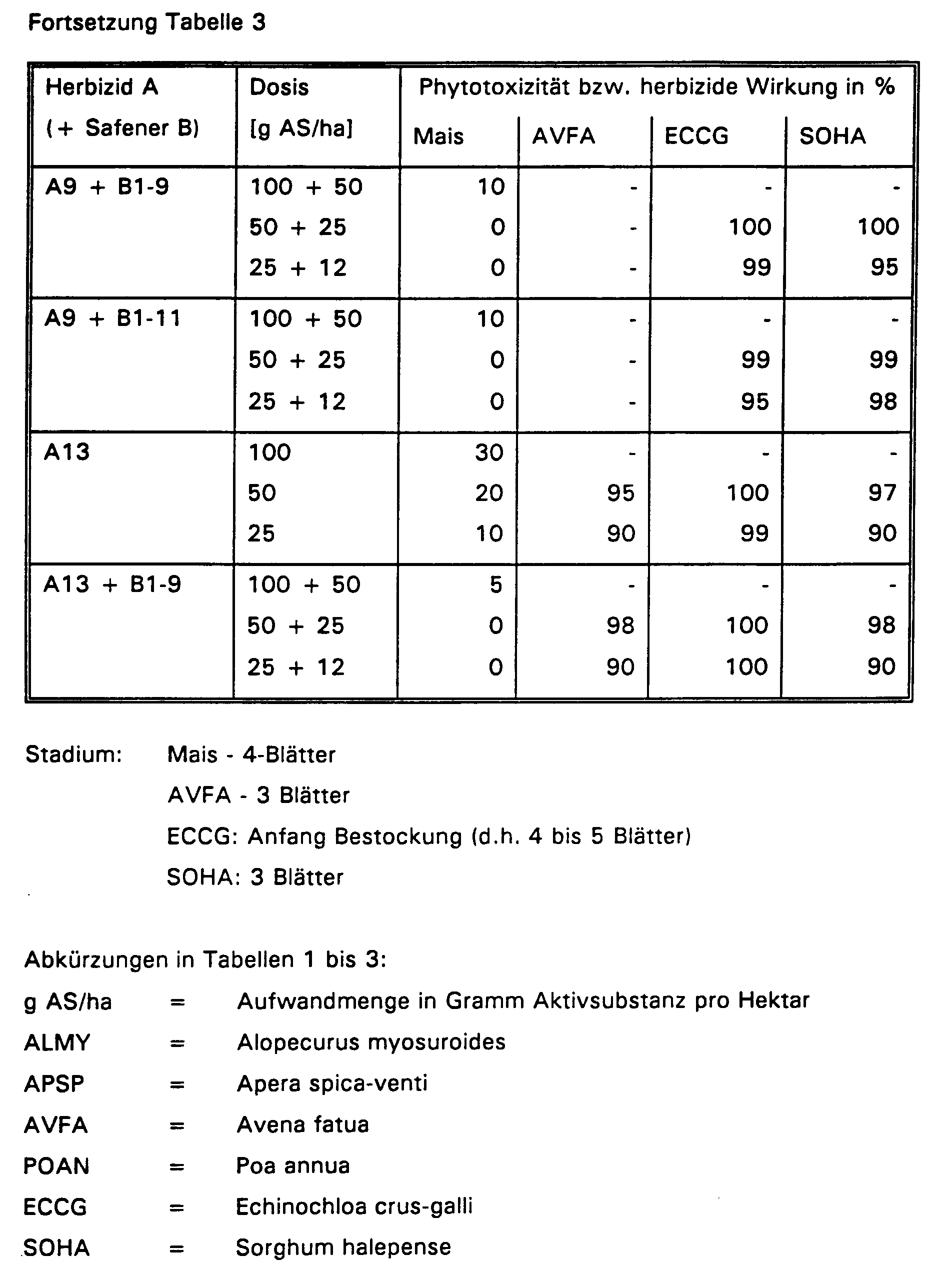

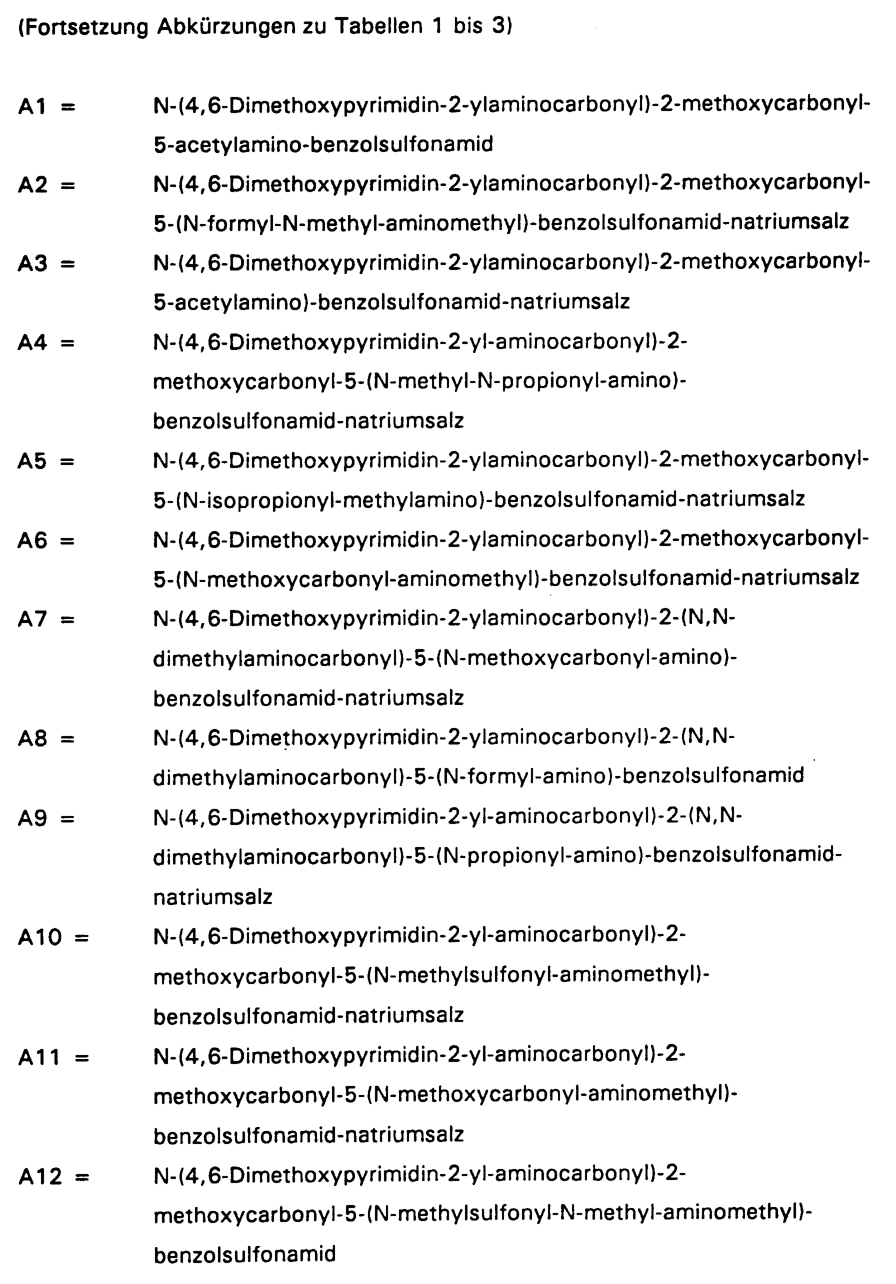

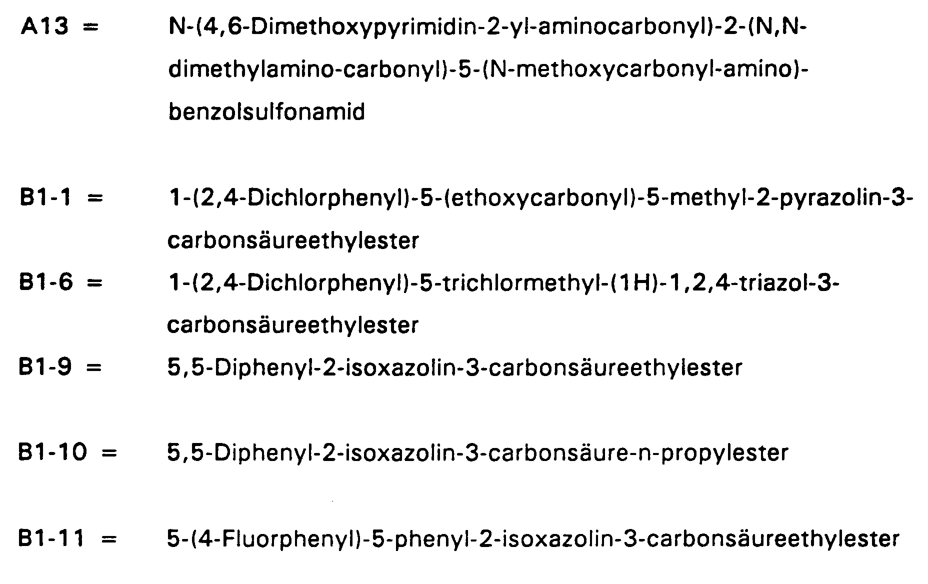

## Patentansprüche

1. Herbizid-Safener-Kombinationen, enthaltend
A) mindestens einen herbiziden Wirkstoff aus der Gruppe der substituierten Phenylsulfonylharnstoffe der Formel (A) und deren Salze 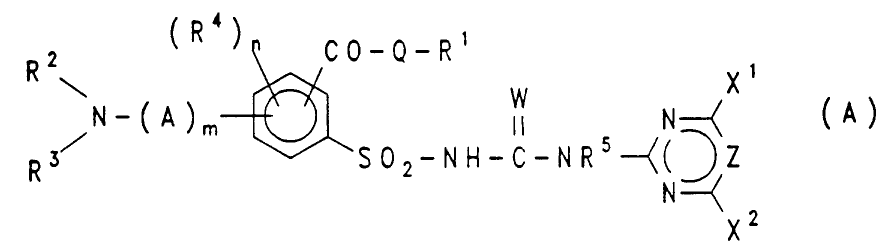 worin
W O oder S,
A eine Gruppe der Formel CR'R'', worin R' und R'' unabhängig voneinander H oder (C₁-C₄)Alkyl bedeuten,
Q O, S oder eine Gruppe NR⁶,
m 0 oder 1,
n 0, 1, 2 oder 3,
R¹ H, einen Kohlenwasserstoffrest oder einen heterocyclischen Rest, wobei jeder der zwei letztgenannten Reste unsubstituiert oder substituiert ist,
R² H, OH oder einen aliphatischen Kohlenwasserstoff- oder Kohlenwasserstoffoxyrest, wobei jeder der zwei letztgenannten Reste unsubstituiert oder substituiert ist,
R³ einen Acylrest,
R⁴ Halogen, CN, NO₂, (C₁-C₄)Alkyl, (C₁-C₄)Alkoxy, [(C₁-C₄)Alkyl]-carbonyl, [(C₁-C₄)Alkoxy]-carbonyl, wobei jeder der vier letztgenannten Reste unsubstituiert oder substituiert ist,
R⁵ H, (C₁-C₅)Alkyl oder (C₁-C₄)Alkoxy,
R⁶ H, (C₁-C₄)Alkyl, (C₃-C₄)Alkenyl, (C₃-C₄)Alkinyl, wobei jeder der letztgenannten drei Reste unsubstituiert oder durch einen oder mehrere Reste aus der Gruppe Halogen, (C₁-C₄)Alkyl, (C₁-C₄)Alkoxy und (C₁-C₄)Alkylthio substituiert ist, oder (C₁-C₄)Alkoxy oder OH,
X¹, X² unabhängig voneinander H, Halogen, (C₁-C₆)Alkyl, (C₂-C₆)Alkenyl, (C₂-C₆)Alkinyl, (C₃-C₇)Cycloalkyl, (C₁-C₆)Alkoxy, (C₂-C₆)Alkenyloxy, (C₂-C₆)Alkinyloxy, (C₁-C₆)Alkylthio, Mono- oder Di-[(C₁-C₄)alkyl]-amino, wobei jeder der zehn letztgenannten Reste unsubstituiert oder durch einen oder mehrere Reste aus der Gruppe Halogen, (C₁-C₄)Alkoxy, (C₁-C₄)Haloalkoxy und (C₁-C₄)Alkylthio substituiert ist, und
Z CH, N oder eine Gruppe der Formel 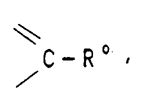 worin R^{o} Halogen, Cyano, (C₁-C₃)Alkyl, (C₁-C₃)Haloalkyl, (C₁-C₃)Alkoxy oder (C₁-C₃)Haloalkoxy ist,
bedeuten, und
B) mindestens einen Safener aus der Gruppe der Verbindungen der Formeln (B1) und (B2), 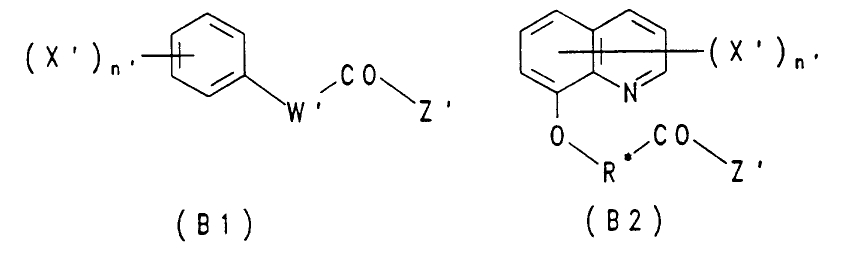 in welchen
X' Wasserstoff, Halogen, (C₁-C₄)Alkyl, (C₁-C₄)Alkoxy, Nitro oder (C₁-C₄)Halogenalkyl bedeutet,
Z' OR⁷, SR⁷ oder NR⁷R⁸ bedeutet oder für einen gesättigten oder ungesättigten 3- bis 7-gliedrigen Heterocyclus mit mindestens einem N-Atom und bis zu 3 Heteroatomen steht, der über das N-Atom mit der Carbonylgruppe in (B1) bzw. (B2) verbunden ist und unsubstituiert oder durch Reste aus der Gruppe (C₁-C₄)Alkyl, (C₁-C₄)Alkoxy oder gegebenenfalls substituiertes Phenyl substituiert ist,
R* eine (C₁ oder C₂)-Alkandiylkette bedeutet, die unsubstituiert oder mit einem oder zwei (C₁-C₄)Alkylresten oder mit [(C₁-C₃)-Alkoxy]-carbonyl substituiert ist,
R⁷ Wasserstoff oder einen unsubstituierten oder substituierten aliphatischen Kohlenwasserstoffrest bedeutet,
R⁸ Wasserstoff, (C₁-C₆)Alkyl, (C₁-C₆)Alkoxy oder gegebenenfalls substituiertes Phenyl bedeutet,
n' eine ganze Zahl von 1 bis 5 ist,
W' einen divalenten heterocyclischen Rest aus der Gruppe der teilungesättigten oder heteroaromatischen Fünfring-Heterocyclen mit 1 bis 3 Heteroringatomen des Typs N und O, wobei mindestens ein N-Atom und höchstens ein O-Atom im Ring enthalten ist, bedeutet.

2. Herbizid-Safener-Kombinationen nach Anspruch 1, dadurch gekennzeichnet, daß in den Formeln (B1) bzw. (B2)
R⁷ Wasserstoff, (C₁-C₁₈)Alkyl, (C₃-C₁₂)Cycloalkyl, (C₂-C₈)Alkenyl oder (C₂-C₈)Alkinyl bedeutet, wobei die vorstehenden C-haltigen Reste unsubstituiert oder ein- oder mehrfach, vorzugsweise bis zu dreifach, durch gleiche oder verschiedene Reste aus der Gruppe enthaltend Halogen, Hydroxy, (C₁-C₈)Alkoxy, (C₁-C₈)Alkylmercapto, (C₂-C₈)Alkenylmercapto, (C₂-C₈)Alkinylmercapto, (C₂-C₈)Alkenyloxy, (C₂-C₈)Alkinyloxy, (C₃-C₇)Cycloalkyl, (C₃-C₇)Cycloalkoxy, Cyano, Mono- und Di-(C₁-C₄-alkyl)-amino, Carboxy, (C₁-C₈)Alkoxycarbonyl, (C₂-C₈)Alkenyloxycarbonyl, (C₁-C₈)Alkylmercaptocarbonyl, (C₂-C₈)Alkinyloxycarbonyl, (C₁-C₈)Alkylcarbonyl, (C₂-C₈)Alkenylcarbonyl, (C₂-C₈)Alkinylcarbonyl, 1-(Hydroxyimino)-(C₁-C₆)-alkyl, 1-[(C₁-C₄)Alkylimino]-(C₁-C₄)-alkyl, 1-[(C₁-C₄)Alkoxyimino]-(C₁-C₆)-alkyl, (C₁-C₈)Alkylcarbonylamino, (C₂-C₈)Alkenylcarbonylamino, (C₂-C₈)Alkinylcarbonylamino, Aminocarbonyl, (C₁-C₈)Alkylaminocarbonyl, Di-(C₁-C₆)-alkylaminocarbonyl, (C₂-C₆)Alkenylaminocarbonyl, (C₂-C₆)Alkinylaminocarbonyl, (C₁-C₈)Alkoxycarbonylamino, (C₁-C₈)Alkylaminocarbonylamino, (C₁-C₆)Alkylcarbonyloxy, das unsubstituiert oder durch Halogen, Nitro, (C₁-C₄)Alkoxy oder gegebenenfalls substituiertes Phenyl substituiert ist, (C₂-C₆)Alkenylcarbonyloxy, (C₂-C₆)Alkinylcarbonyloxy, (C₁-C₈)Alkylsulfonyl, Phenyl, Phenyl-(C₁-C₆)-alkoxy, Phenyl-(C₁-C₆)-alkoxycarbonyl, Phenoxy, Phenoxy-(C₁-C₆)-alkoxy, Phenoxy-(C₁-C₆)-alkoxycarbonyl, Phenylcarbonyloxy, Phenylcarbonylamino, Phenyl-(C₁-C₆)-alkylcarbonylamino, wobei die letztgenannten 9 Reste im Phenylring unsubstituiert oder ein- oder mehrfach, vorzugsweise bis zu dreifach durch gleiche oder verschiedene Reste aus der Gruppe Halogen, (C₁-C₄)Alkyl, (C₁-C₄)Alkoxy, (C₁-C₄)Halogenalkyl, (C₁-C₄)Halogenalkoxy und Nitro substituiert sind, und Reste der Formeln -SiR'₃, -O-SiR'₃, R'₃Si-(C₁-C₈)-alkoxy, -CO-O-NR'₂, -O-N = CR'₂, -N = CR'₂, -NR'₂, -O-NR'₂, CH(OR')₂, -O-(CH₂)ₘ-CH(OR')₂, -CR'''(OR')₂ und -O-(CH₂)ₘCR'''(OR'')₂, worin die R' in den genannten Formeln unabhängig voneinander Wasserstoff, (C₁-C₄)Alkyl, Phenyl, das unsubstituiert oder ein- oder mehrfach, vorzugsweise bis zu dreifach durch gleiche oder verschiedene Reste aus der Gruppe Halogen, (C₁-C₄)Alkyl, (C₁-C₄)Alkoxy, (C₁-C₄)Halogenalkyl, (C₁-C₄)Halogenalkoxy und Nitro substituiert ist, oder paarweise eine (C₂-C₆)Alkandiylkette und m = 0 bis 6 bedeuten und R''' Wasserstoff oder (C₁-C₄)Alkyl bedeutet, und einen substituierten Alkoxyrest der Formel R''O-CHR'''CH(OR'')-(C₁-C₆)-alkoxy, worin die R'' unabhängig voneinander (C₁-C₄)Alkyl oder zusammen (C₁-C₆)Alkandiyl und R''' Wasserstoff oder (C₁-C₄)Alkyl bedeuten, substituiert sind,
W' einen divalenten heterocyclischen Rest aus der Gruppe der Reste der Formeln (W1) bis (W4) 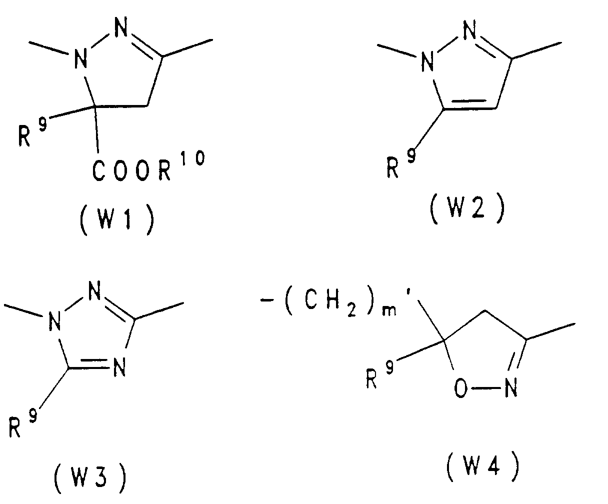
R⁹ Wasserstoff, (C₁-C₈)Alkyl, (C₁-C₈)Halogenalkyl, (C₃-C₁₂)Cycloalkyl oder gegebenenfalls substituiertes Phenyl bedeutet,
R¹⁰ Wasserstoff, (C₁-C₈)Alkyl, (C₁-C₈)Halogenalkyl, (C₁-C₄)Alkoxy(C₁-C₄)alkyl, (C₁-C₆)Hydroxyalkyl, (C₃-C₁₂)Cycloalkyl oder Tri-(C₁-C₄)-alkyl-silyl bedeutet und
m' 0 oder 1 bedeutet,
bedeuten.

3. Herbizid-Safener-Kombinationen nach Anspruch 1 oder 2, dadurch gekennzeichnet, daß in Formel (A)
R¹ (C₁-C₆)Alkyl, (C₂-C₆)Alkenyl, (C₂-C₆)Alkinyl, (C₃-C₆)Cycloalkyl, wobei jeder der vier letztgenannten Reste unsubstituiert oder durch einen oder mehrere Reste aus der Gruppe Halogen, CN, (C₁-C₄)Alkoxy, (C₁-C₄)Alkylthio, (C₁-C₄)Haloalkoxy, Mono-(C₁-C₄-alkyl)-amino, Di-(C₁-C₄-alkyl)-amino, (C₁-C₄)Alkylsulfonyl, (C₁-C₄-alkyl)-aminocarbonyl, Di-(C₁-C₄-alkyl)-aminocarbonyl, Phenyl und substituiertes Phenyl substituiert ist, oder einen Rest des Typs Heterocyclyl oder Heterocyclyl-(C₁-C₄)alkyl mit 3 bis 7 Ringatomen aus der Gruppe der Reste mit den Formeln A-1 bis A-13 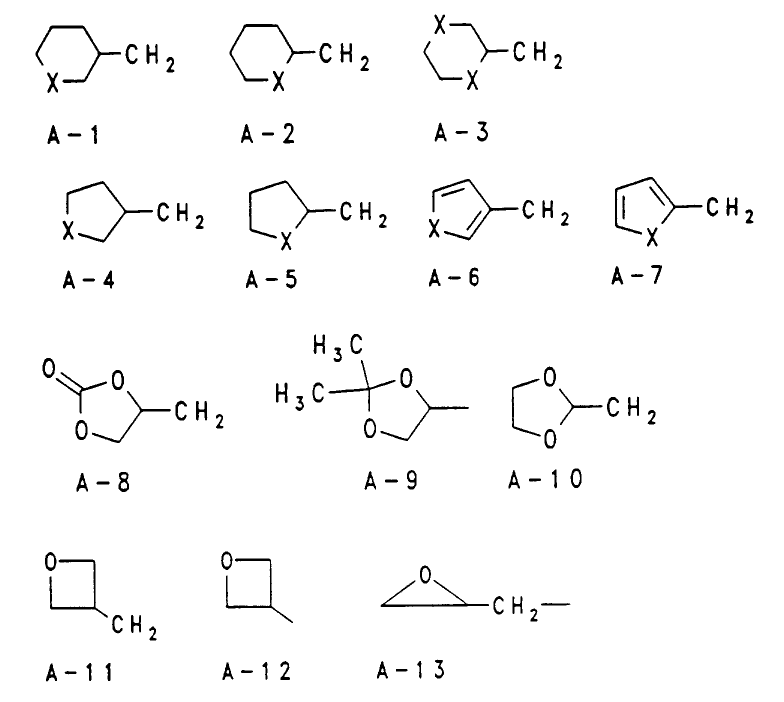
X O, S, S(O) oder SO₂,
R² H, OH, (C₁-C₆)Alkyl, (C₃-C₇)Cycloalkyl, (C₂-C₆)Alkenyl, (C₂-C₆)Alkinyl, (C₁-C₆)Alkoxy, (C₃-C₇)Cycloalkoxy, (C₂-C₆)Alkenyloxy, (C₂-C₆)Alkinyloxy, wobei die acht letztgenannten Reste unsubstituiert oder durch einen oder mehrere Reste aus der Gruppe (C₁-C₄)Alkoxy, (C₁-C₄)Haloalkoxy, (C₂-C₄)Alkenyloxy, (C₂-C₄)Haloalkenyloxy, (C₂-C₄)Alkinyloxy, (C₂-C₄)Haloalkinyloxy, (C₁-C₄)Alkylthio, (C₁-C₄)Haloalkylthio, Halogen, OH, NH₂, Mono- und Di-[(C₁-C₄)alkyl]amino, CN, NO₂, CONH₂, CHO, [(C₁-C₆)Alkyl]-carbonyl, (C₁-C₄)Alkylsulfonyl, [(C₁-C₄)Alkoxy]-carbonyl, Mono- und Di-[(C₁-C₄)alkyl]-aminocarbonyl, sowie im Falle cyclischer Reste auch (C₁-C₄)Alkyl und (C₁-C₄)Haloalkyl substituiert sind,
R³ CO-R¹¹, CO-OR¹², CO-NR¹³R¹⁴, CO-SR¹⁵, CS-R¹⁶, CS-OR¹⁷, CS-NR¹⁸R¹⁹, CS-SR²⁰, SO₂R²¹, SO₂NR²²R²³,
R¹¹ H, (C₁-C₆)Alkyl, (C₂-C₆)Alkenyl, (C₂-C₆)Alkinyl, wobei die drei letztgenannten Reste unabhängig voneinander unsubstituiert oder durch einen oder mehrere Reste aus der Gruppe Halogen, (C₁-C₄)Alkoxy, (C₁-C₄)Alkylthio und NR²⁴R²⁵ substituiert sind, oder unsubstituiertes oder substituiertes (C₃-C₈)Cycloalkyl, unsubstituiertes oder substituiertes Phenyl, unsubstituiertes oder substituiertes Heteroaryl oder Phenyl(C₁-C₄)alkyl, das am Phenylring unsubstituiert oder substituiert ist,
R¹² (C₁-C₆)Alkyl, (C₂-C₆)Alkenyl, (C₂-C₆)Alkinyl, wobei die drei letztgenannten Reste unabhängig voneinander unsubstituiert oder durch einen oder mehrere Reste aus der Gruppe Halogen, (C₁-C₄)Alkoxy, (C₁-C₄)Alkylthio und NR²⁶R²⁷ substituiert sind, oder (C₃-C₆)Cycloalkyl, das unsubstituiert oder durch einen oder mehrere Reste aus der Gruppe Halogen, (C₁-C₄)Alkyl und (C₁-C₄)Alkoxy substituiert ist, oder (C₃-C₆)Cycloalkyl-(C₁-C₃)alkyl,
R¹³ H, (C₁-C₆)Alkyl, (C₂-C₆)Alkenyl, (C₂-C₆)Alkinyl, wobei die drei letztgenannten Reste unabhängig voneinander unsubstituiert oder durch einen oder mehrere Reste aus der Gruppe Halogen substituiert sind, oder [(C₁-C₆)Alkoxy]-carbonyl, (C₁-C₄)Alkoxy oder OH,
R¹⁴ H, (C₁-C₆)Alkyl, (C₂-C₆)Alkenyl, (C₂-C₆)Alkinyl, wobei die drei letztgenannten Reste unabhängig voneinander unsubstituiert oder durch einen oder mehrere Reste aus der Gruppe Halogen, (C₁-C₄)Alkxoy, (C₁-C₄)Alkylthio und NR²⁸R²⁹ substituiert sind,
oder NR¹³R¹⁴ einen heterocyclischen Rest, der neben dem N-Atom weitere Heteroeinheiten aus der Gruppe O, N, S, SO oder SO₂ im Ringgerüst enthalten kann, und der unsubstituiert oder durch einen oder mehrere Reste aus der Gruppe Halogen, OH, NH₂, NHCH₃, N(CH₃)₂, CN, CONHCH₃, CO₂CH₃, COCH₃, CON(CH₃)₂, CHO, (C₁-C₃)Alkyl, CONH₂, (C₁-C₃)Alkoxy, (C₁-C₃)Haloalkoxy, (C₁-C₃)Haloalkyl und der Oxofunktion substituiert ist,
R¹⁵ einen Rest analog R¹²,
R¹⁶ einen Rest analog R¹¹,
R¹⁷ einen Rest analog R¹²,
R¹⁸ einen Rest analog R¹³,
R¹⁹ einen Rest analog R¹⁴,
oder NR¹⁸R¹⁹ einen Rest analog NR¹³R¹⁴,
R²⁰ einen Rest analog R¹²
R²¹ (C₁-C₆)Alkyl, (C₂-C₆)Alkenyl, (C₂-C₆)Alkinyl, wobei die drei letztgenannten Reste unabhängig voneinander unsubstituiert oder durch einen oder mehrere Reste aus der Gruppe Halogen, (C₁-C₄)Alkoxy, (C₁-C₄)Alkylthio und NR³⁰R³¹ substituiert sind,
R²² einen Rest analog R¹³,
R²³ einen Rest analog R¹⁴ oder
NR²²R²³ einen Rest analog NR¹³R¹⁴,
R²⁴ H, (C₁-C₄)Alkyl, (C₁-C₄)Haloalkyl, (C₁-C₄)Alkenyl, (C₁-C₄)Haloalkenyl, (C₁-C₄)Alkoxy, (C₁-C₄)Haloalkoxy, oder Hydroxy,
R²⁵ H, (C₁-C₄)Alkyl, (C₁-C₄)Haloalkyl, (C₁-C₄)Alkenyl oder (C₁-C₄)Haloalkenyl,
R²⁶ analog R²⁴,
R²⁷ analog R²⁵,
R²⁸ analog R²⁴,
R²⁹ analog R²⁵,
R³⁰ analog R²⁴ und
R³¹ analog R²⁵
bedeuten.

4. Herbizid-Safener-Kombinationen nach einem der Ansprüche 1 bis 3, dadurch gekennzeichnet, daß
R¹ (C₁-C₆)Alkyl, (C₂-C₆)Alkenyl, (C₂-C₆)Alkinyl, (C₃-C₆)Cycloalkyl, wobei jeder der vier letztgenannten Reste unsubstituiert oder durch einen oder mehrere Reste aus der Gruppe F, Cl, Br, I, CN, OCH₃, OCF₃, N(CH₃)₂, SO₂CH₃, CO₂CH₃, CO₂N(CH₃)₂ und Phenyl substituiert ist, oder eine Gruppe der genannten Formeln A-1 bis A-13,
R² H, (C₁-C₄)Alkyl, (C₂-C₄)Alkenyl, (C₂-C₄)Alkinyl, (C₃-C₆)Cycloalkyl oder (C₁-C₄)Haloalkyl,
R³ CO-R¹¹, CO-OR¹², CO-NR¹³R¹⁴ oder SO₂R²¹,
R⁴ Halogen, (C₁-C₃)Alkyl oder (C₁-C₃)Alkoxy,
n 0 oder 1,
m 0 oder 1,
R⁵ H oder CH₃,
R¹¹ H, (C₁-C₆)Alkyl, (C₂-C₄)Alkenyl, (C₂-C₄)Alkinyl, (C₁-C₄)Haloalkyl, (C₁-C₄)Alkoxy-(C₁-C₄)-alkyl, Phenyl oder Heteroaryl mit 5 oder 6 Ringatomen, wobei jeder der zwei letztgenannten Reste unsubstituiert oder substituiert ist,
R¹² einen Rest analog R¹¹, außer Wasserstoff,
R¹³, R¹⁴ unabhängig voneinander H oder (C₁-C₄)Alkyl,
R²¹ (C₁-C₄)Alkyl, (C₁-C₄)Haloalkyl oder (C₁-C₄)Alkoxy-(C₁-C₄)alkyl, einer der Reste X¹ und X² Halogen, (C₁-C₂)Alkyl, (C₁-C₂)Alkoxy, (C₁-C₂)Alkylthio,
wobei jeder der drei letztgenannten Reste unsubstituiert oder durch einen oder mehrere Reste aus der Gruppe Halogen, (C₁-C₂)Alkoxy und (C₁-C₂)Alkylthio substituiert ist, oder Mono- oder Di(C₁-C₂-alkyl)amino, und
der andere der Reste X¹ und X² (C₁-C₂)Alkyl, (C₁-C₂)Haloalkyl, (C₁-C₂)Alkoxy, (C₁-C₂)Haloalkoxy oder (C₁-C₂)Alkylthio,
Z CH oder N bedeuten.

5. Herbizid-Safener-Kombintion nach einem der Ansprüche 1 bis 4, dadurch gekennzeichnet, daß sie in Form einer Zubereitung (herbizides Mittel) formuliert ist und 0,1 bis 95 Gew.-% Wirkstoffe (A) und (B) und 1 bis 99,9 Gew.-% üblicher Formulierungsmittel enthält.

6. Herbizid-Safener-Kombination nach einem der Ansprüche 1 bis 5, dadurch gekennzeichnet, daß sie die Wirkstoffe vom Typ A und B im Gewichtsverhältnis von 1:100 bis 100:1 enthält.

7. Verfahren zum Schutz von Kulturpflanzen vor phytotoxischen Nebenwirkungen von Herbiziden vom Typ A, dadurch gekennzeichnet, daß eine wirksame Menge eines Safeners des Typs B vor, nach oder gleichzeitig mit dem Herbizid A auf die Plflanzen, Pflanzenteile, Pflanzensamen oder die Anbaufläche appliziert wird, wobei die Kombination aus Herbizid A und Safener B nach einem der Ansprüche 1 bis 6 definiert ist.

8. Verfahren nach Anspruch 7, dadurch gekennzeichnet, daß die Kulturpflanzen Getreidepflanzen, Reispflanzen oder Maispflanzen sind.

9. Verfahren nach Anspruch 7 oder 8, dadurch gekennzeichnet, daß die Herbizide vom Typ A in einer Aufwandmenge von 0,001 bis 10 kg/ha Aktivsubstanz und einem Gewichtsverhältnis Safener:Herbizid von 1:100 bis 100:1 appliziert werden.

10. Verwendung der Verbindungen vom Typ B als Safener zum Schützen von Kulturpflanzen gegen phytotoxische Nebenwirkungen von Herbiziden des Typs A, wobei die Herbizid-Safener-Kombination A + B nach einem der Ansprüche 1 bis 6 definiert ist.

## Claims

1. A herbicide/safener combination containing
A) at least one herbicidal active substance from the group of substituted phenylsulfonylureas of the formula (A) and salts thereof 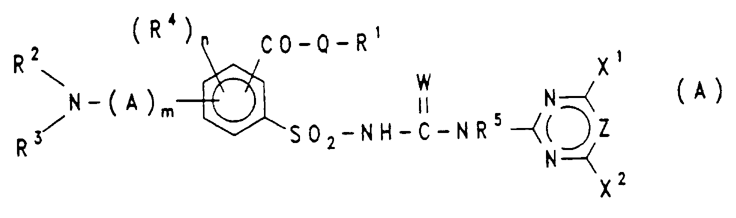 in which
W is O or S,
A is a group of the formula CR'R'', in which R' and R'' are, independently of one another, H or (C₁-C₄)alkyl,
Q is O, S or a group NR⁶,
m is 0 or 1,
n is 0, 1, 2 or 3,
R¹ is H, a hydrocarbon radical or a heterocyclic radical, each of the two last-mentioned radicals being unsubstituted or substituted,
R² is H, OH or an aliphatic hydrocarbon or hydrocarbon-oxy radical, each of the two last-mentioned radicals being unsubstituted or substituted,
R³ is an acyl radical,
R⁴ is halogen, CN, NO₂, (C₁-C₄)alkyl, (C₁-C₄)alkoxy, [(C₁-C₄)alkyl]carbonyl, [(C₁-C₄)alkoxy]carbonyl, each of the four last-mentioned radicals being unsubstituted or substituted,
R⁵ is H, (C₁-C₅)alkyl or (C₁-C₄)alkoxy,
R⁶ is H, (C₁-C₄)alkyl, (C₃-C₄)alkenyl, (C₃-C₄)alkynyl, each of the three last-mentioned radicals being unsubstituted or substituted by one or more radicals from the group consisting of halogen, (C₁-C₄)alkyl, (C₁-C₄)alkoxy and (C₁-C₄)alkylthio, or is (C₁-C₄)alkoxy or OH,
X¹, X² are, independently of one another, H, halogen, (C₁-C₆)alkyl, (C₂-C₆)alkenyl, (C₂-C₆)alkynyl, (C₃-C₇)cycloalkyl, (C₁-C₆)alkoxy, (C₂-C₆)alkenyloxy, (C₂-C₆)alkynyloxy, (C₁-C₆)alkylthio, mono- or di-[(C₁-C₄)alkyl]amino, each of the ten last-mentioned radicals being unsubstituted or substituted by one or more radicals from the group consisting of halogen, (C₁-C₄)alkoxy, (C₁-C₄)haloalkoxy and (C₁-C₄)alkylthio, and
Z is CH, N or a group of the formula 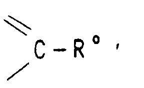 in which R⁰ is halogen, cyano, (C₁-C₃)alkyl, (C₁-C₃)haloalkyl, (C₁-C₃)alkoxy or (C₁-C₃)haloalkoxy,
and
B) at least one safener from the group of compounds of the formulae (B1) and (B2) 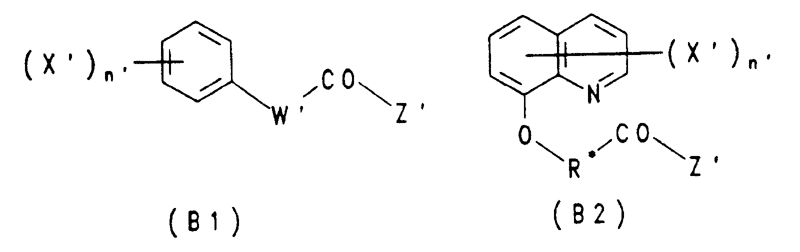 in which
X' is hydrogen, halogen, (C₁-C₄)alkyl, (C₁-C₄)alkoxy, nitro or (C₁-C₄)haloalkyl,
Z' is OR⁷, SR⁷ or NR⁷R⁸ or is a saturated or unsaturated 3- to 7-membered heterocycle which has at least one nitrogen atom and up to 3 hetero atoms, is linked via the nitrogen atom to the carbonyl group in (B1) or (B2) and is unsubstituted or substituted by radicals from the group consisting of (C₁-C₄)alkyl, (C₁-C₄)alkoxy or optionally substituted phenyl,
R* is a (C₁ or C₂)alkanediyl chain which is unsubstituted or substituted by one or two (C₁-C₄)alkyl radicals or by [(C₁-C₃)alkoxy]carbonyl,
R⁷ is hydrogen or an unsubstituted or substituted aliphatic hydrocarbon radical,
R⁸ is hydrogen, (C₁-C₆)alkyl, (C₁-C₆)alkoxy or optionally substituted phenyl,
n' is an integer from 1 to 5,
W' is a divalent heterocyclic radical from the group of partially unsaturated or heteroaromatic five-membered heterocycles having 1 to 3 ring hetero atoms of the type of N and O, the ring containing at least one nitrogen atom and at most one oxygen atom.

2. A herbicide/safener combination as claimed in claim 1, wherein, in the formulae (B1) and (B2),
R⁷ is hydrogen, (C₁-C₁₈)alkyl, (C₃-C₁₂)cycloalkyl, (C₂-C₈)alkenyl or (C₂-C₈)alkynyl, where the above C-containing radicals are unsubstituted or substituted one or more times, preferably up to three times, by identical or different radicals from the group consisting of halogen, hydroxyl, (C₁-C₈)alkoxy, (C₁-C₈)alkylmercapto, (C₂-C₈)alkenylmercapto, (C₂-C₈)alkynylmercapto, (C₂-C₈)alkenyloxy, (C₂-C₈)alkynyloxy, (C₃-C₇)cycloalkyl, (C₃-C₇)cycloalkoxy, cyano, mono- and di-(C₁-C₄-alkyl)amino, carboxyl, (C₁-C₈)alkoxycarbonyl, (C₂-C₈)alkenyloxycarbonyl, (C₁-C₈)alkylmercaptocarbonyl, (C₂-C₈)alkynyloxycarbonyl, (C₁-C₈)alkylcarbonyl, (C₂-C₈)alkenylcarbonyl, (C₂-C₈)alkynylcarbonyl, 1-(hydroxyimino)-(C₁-C₆)alkyl, 1-[(C₁-C₄)alkylimino]-(C₁-C₄)alkyl, 1-[(C₁-C₄)alkoxyimino]-(C₁-C₆)alkyl, (C₁-C₈)alkylcarbonylamino, (C₂-C₈)alkenylcarbonylamino, (C₂-C₈)alkynylcarbonylamino, aminocarbonyl, (C₁-C₈)alkylaminocarbonyl, di-(C₁-C₆)alkylaminocarbonyl, (C₂-C₆)alkenylaminocarbonyl, (C₂-C₆)alkynylaminocarbonyl, (C₁-C₈)alkoxycarbonylamino, (C₁-C₈)alkylaminocarbonylamino, (C₁-C₆)alkylcarbonyloxy, which is unsubstituted or substituted by halogen, nitro, (C₁-C₄)alkoxy or optionally substituted phenyl, or is (C₂-C₆)alkenylcarbonyloxy, (C₂-C₆)alkynylcarbonyloxy, (C₁-C₈)alkylsulfonyl, phenyl, phenyl-(C₁-C₆)alkoxy, phenyl-(C₁-C₆)alkoxycarbonyl, phenoxy, phenoxy-(C₁-C₆)alkoxy, phenoxy-(C₁-C₆)alkoxycarbonyl, phenylcarbonyloxy, phenylcarbonylamino, phenyl-(C₁-C₆)alkylcarbonylamino, where the 9 last-mentioned radicals are unsubstituted or substituted one or more times, preferably up to three times, in the phenyl ring by identical or different radicals from the group consisting of halogen, (C₁-C₄)alkyl, (C₁-C₄)alkoxy, (C₁-C₄)haloalkyl, (C₁-C₄)haloalkoxy and nitro, and radicals of the formulae -SiR'₃, -O-SiR'₃, R'₃Si-(C₁-C₈)alkoxy, -CO-O-NR'₂, -O-N=CR'₂, -N=CR'₂, -NR'₂, -O-NR'₂, CH(OR')₂, -O-(CH₂)ₘ-CH(OR')₂, -CR'''(OR')₂ and -O-(CH₂)ₘCR'''(OR'')₂, in which the R' in the said formulae are, independently of one another, hydrogen, (C₁-C₄)alkyl, phenyl which is unsubstituted or substituted one or more times, preferably up to three times, by identical or different radicals from the group consisting of halogen, (C₁-C₄)alkyl, (C₁-C₄)alkoxy, (C₁-C₄)haloalkyl, (C₁-C₄)haloalkoxy and nitro, or pairwise are a (C₂-C₆)alkanediyl chain and m = 0 to 6, and R''' is hydrogen or (C₁-C₄)alkyl, and a substituted alkoxy radical of the formula R''O-CHR'''CH(OR'')-(C₁-C₆)alkoxy, in which the R'' are, independently of one another, (C₁-C₄)alkyl or together are (C₁-C₆)alkanediyl and R''' is hydrogen or (C₁-C₄)alkyl,
W' is a divalent heterocyclic radical from the group of radicals of the formulae (W1) to (W4) 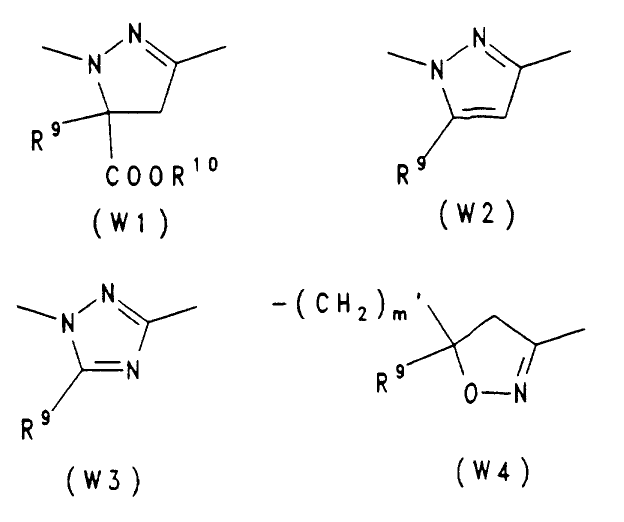
R⁹ is hydrogen, (C₁-C₈)alkyl, (C₁-C₈)haloalkyl, (C₃-C₁₂)cycloalkyl or optionally substituted phenyl,
R¹⁰ is hydrogen, (C₁-C₈)alkyl, (C₁-C₈)haloalkyl, (C₁-C₄)alkoxy-(C₁-C₄)alkyl, (C₁-C₆)hydroxyalkyl, (C₃-C₁₂)cycloalkyl or tri-(C₁-C₄)alkylsilyl, and
m' is 0 or 1.

3. A herbicide/safener combination as claimed in claim 1 or 2, wherein, in formula (A),
R¹ is (C₁-C₆)alkyl, (C₂-C₆)alkenyl, (C₂-C₆)alkynyl, (C₃-C₆)cycloalkyl, each of the four last-mentioned radicals being unsubstituted or substituted by one or more radicals from the group consisting of halogen, CN, (C₁-C₄)alkoxy, (C₁-C₄)alkylthio, (C₁-C₄)haloalkoxy, mono-(C₁-C₄-alkyl)amino, di-(C₁-C₄-alkyl)amino, (C₁-C₄)alkylsulfonyl, (C₁-C₄-alkyl)aminocarbonyl, di(C₁-C₄-alkyl)aminocarbonyl, phenyl and substituted phenyl, or is a radical of the type of heterocyclyl or heterocyclyl-(C₁-C₄)alkyl having 3 to 7 ring atoms from the group of radicals with the formulae A-1 to A-13 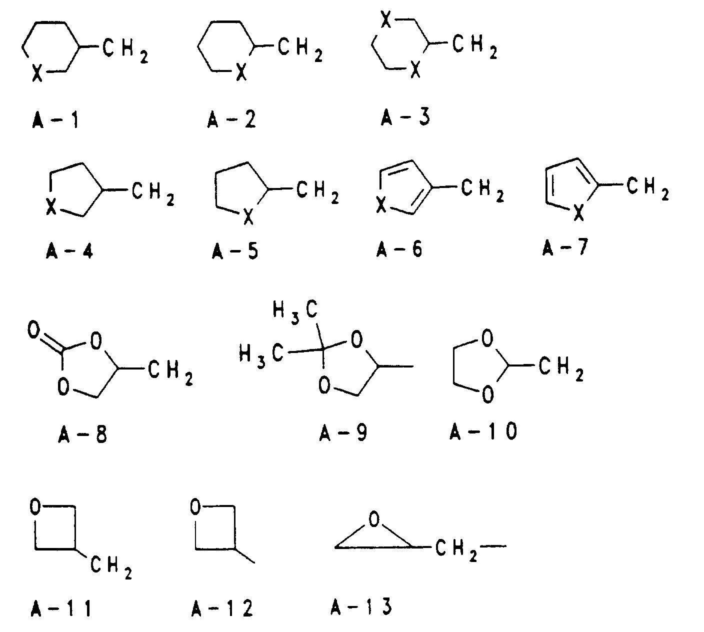
X is O, S, S(O) or SO₂,
R² is H, OH, (C₁-C₆)alkyl, (C₃-C₇)cycloalkyl, (C₂-C₆)alkenyl, (C₂-C₆)alkynyl, (C₁-C₆)alkoxy, (C₃-C₇)cycloalkoxy, (C₂-C₆)alkenyloxy, (C₂-C₆)alkynyloxy, the eight last-mentioned radicals being unsubstituted or substituted by one or more radicals from the group consisting of (C₁-C₄)alkoxy, (C₁-C₄)haloalkoxy, (C₂-C₄)alkenyloxy, (C₂-C₄)haloalkenyloxy, (C₂-C₄)alkynyloxy, (C₂-C₄)haloalkynyloxy, (C₁-C₄)alkylthio, (C₁-C₄)haloalkylthio, halogen, OH, NH₂, mono- and di-[(C₁-C₄)alkyl]amino, CN, NO₂, CONH₂, CHO, [(C₁-C₆)alkyl]carbonyl, (C₁-C₄)alkylsulfonyl, [(C₁-C₄)alkoxy]carbonyl, mono- and di-[(C₁-C₄)alkyl]aminocarbonyl, and in the case of cyclic radicals also (C₁-C₄)alkyl and (C₁-C₄)haloalkyl,
R³ is CO-R¹¹, CO-OR¹², CO-NR¹³R¹⁴, CO-SR¹⁵, CS-R¹⁶, CS-OR¹⁷, CS-NR¹⁸R¹⁹, CS-SR²⁰, SO₂R²¹, SO₂NR²²R²³,
R¹¹ is H, (C₁-C₆)alkyl, (C₂-C₆)alkenyl, (C₂-C₆)alkynyl, the three last-mentioned radicals being, independently of one another, unsubstituted or substituted by one or more radicals from the group consisting of halogen, (C₁-C₄)alkoxy, (C₁-C₄)alkylthio and NR²⁴R²⁵, or unsubstituted or substituted (C₃-C₈)cycloalkyl, unsubstituted or substituted phenyl, unsubstituted or substituted heteroaryl or phenyl(C₁-C₄)alkyl which is unsubstituted or substituted on the phenyl ring,
R¹² is (C₁-C₆)alkyl, (C₂-C₆)alkenyl, (C₂-C₆)alkynyl, the three last-mentioned radicals being, independently of one another, unsubstituted or substituted by one or more radicals from the group consisting of halogen, (C₁-C₄)alkoxy, (C₁-C₄)alkylthio and NR²⁶R²⁷, or (C₃-C₆)cycloalkyl which is unsubstituted or substituted by one or more radicals from the group consisting of halogen, (C₁-C₄)alkyl and (C₁-C₄)alkoxy, or (C₃-C₆)cycloalkyl-(C₁-C₃)alkyl,
R¹³ is H, (C₁-C₆)alkyl, (C₂-C₆)alkenyl, (C₂-C₆)alkynyl, the three last-mentioned radicals being, independently of one another, unsubstituted or substituted by one or more radicals from the group consisting of halogen, or is [(C₁-C₆)alkoxy]carbonyl, (C₁-C₄)alkoxy or OH,
R¹⁴ is H, (C₁-C₆)alkyl, (C₂-C₆)alkenyl, (C₂-C₆)alkynyl, the three last-mentioned radicals being, independently of one another, unsubstituted or substituted by one or more radicals from the group consisting of halogen, (C₁-C₄)alkoxy, (C₁-C₄)alkylthio and NR²⁸R²⁹,
or NR¹³R¹⁴ is a heterocyclic radical which, besides the nitrogen atom, can contain further hetero units from the group consisting of O, N, S, SO or SO₂ in the ring framework and which is unsubstituted or substituted by one or more radicals from the group consisting of halogen, OH, NH₂, NHCH₃, N(CH₃)₂, CN, CONHCH₃, CO₂CH₃, COCH₃, CON(CH₃)₂, CHO, (C₁-C₃)alkyl, CONH₂, (C₁-C₃)alkoxy, (C₁-C₃)haloalkoxy, (C₁-C₃)haloalkyl and the oxo group,
R¹⁵ is a radical analogous to R¹²,
R¹⁶ is a radical analogous to R¹¹,
R¹⁷ is a radical analogous to R¹²,
R¹⁸ is a radical analogous to R¹³,
R¹⁹ is a radical analogous to R¹⁴,
or NR¹⁸R¹⁹ is a radical analogous to NR¹³R¹⁴,
R²⁰ is a radical analogous to R¹²,
R²¹ is (C₁-C₆)alkyl, (C₂-C₆)alkenyl, (C₂-C₆)alkynyl, the three last-mentioned radicals being, independently of one another, unsubstituted or substituted by one or more radicals from the group consisting of halogen, (C₁-C₄)alkoxy, (C₁-C₄)alkylthio and NR³⁰R³¹,
R²² is a radical analogous to R¹³,
R²³ is a radical analogous to R¹⁴ or
NR²²R²³ is a radical analogous to NR¹³R¹⁴,
R²⁴ is H, (C₁-C₄)alkyl, (C₁-C₄)haloalkyl, (C₁-C₄)alkenyl, (C₁-C₄)haloalkenyl, (C₁-C₄)alkoxy, (C₁-C₄)haloalkoxy or hydroxyl,
R²⁵ is H, (C₁-C₄)alkyl, (C₁-C₄)haloalkyl, (C₁-C₄)alkenyl or (C₁-C₄)haloalkenyl,
R²⁶ is analogous to R²⁴,
R²⁷ is analogous to R²⁵,
R²⁸ is analogous to R²⁴,
R²⁹ is analogous to R²⁵,
R³⁰ is analogous to R²⁴ and
R³¹ is analogous to R²⁵.

4. A herbicide/safener combination as claimed in any of claims 1 to 3, wherein
R¹ is (C₁-C₆)alkyl, (C₂-C₆)alkenyl, (C₂-C₆)alkynyl, (C₃-C₆)cycloalkyl, each of the four last-mentioned radicals being unsubstituted or substituted by one or more radicals from the group consisting of F, Cl, Br, I, CN, OCH₃, OCF₃, N(CH₃)₂, SO₂CH₃, CO₂CH₃, CO₂N(CH₃)₂ and phenyl, or a group of said formulae A-1 to A-13,
R² is H, (C₁-C₄)alkyl, (C₂-C₄)alkenyl, (C₂-C₄)alkynyl, (C₃-C₆)cycloalkyl or (C₁-C₄)haloalkyl,
R³ is CO-R¹¹, CO-OR¹², CO-NR¹³R¹⁴ or SO₂R²¹,
R⁴ is halogen, (C₁-C₃)alkyl or (C₁-C₃)alkoxy,
n is 0 or 1,
m is 0 or 1,
R⁵ is H or CH₃,
R¹¹ is H, (C₁-C₆)alkyl, (C₂-C₄)alkenyl, (C₂-C₄)alkynyl, (C₁-C₄)haloalkyl, (C₁-C₄)alkoxy(C₁-C₄)alkyl, phenyl or heteroaryl with 5 or 6 ring atoms, each of the two last-mentioned radicals being unsubstituted or substituted,
R¹² is a radical analogous to R¹¹, apart from hydrogen,
R¹³, R¹⁴ are, independently of one another, H or (C₁-C₄)alkyl,
R²¹ is (C₁-C₄)alkyl, (C₁-C₄)haloalkyl or (C₁-C₄)alkoxy-(C₁-C₄)alkyl,
one of the radicals X¹ and X² is halogen, (C₁-C₂)alkyl, (C₁-C₂)alkoxy, (C₁-C₂)alkylthio, each of the three last-mentioned radicals being unsubstituted or substituted by one or more radicals from the group consisting of halogen, (C₁-C₂)alkoxy and (C₁-C₂)alkylthio, or mono- or di(C₁-C₂-alkyl)amino, and
the other one of the radicals X¹ and X² is (C₁-C₂)alkyl, (C₁-C₂)haloalkyl, (C₁-C₂)alkoxy, (C₁-C₂)haloalkoxy or (C₁-C₂)alkylthio,
Z is CH or N.

5. A herbicide/safener combination as claimed in any of claims 1 to 4, which is formulated in the form of a composition (herbicidal composition) and contains 0.1 to 95% by weight of active substances (A) and (B) and 1 to 99.9% by weight of customary formulating agents.

6. A herbicide/safener combination as claimed in any of claims 1 to 5, which contains the active substances of type A and B in the ratio of from 1:100 to 100:1 by weight.

7. A method for protecting crop plants from phytotoxic side effects of herbicides of type A, which comprises applying an effective amount of a safener of type B before, after or at the same time as herbicide A to the plants, plant parts, plant seeds or the growing area, where the combination of herbicide A and safener B is as defined in any of claims 1 to 6.

8. The method as claimed in claim 7, wherein the crop plants are cereal plants, rice plants or corn plants.

9. The method as claimed in claim 7 or 8, wherein the herbicides of type A are applied at an application rate of 0.001 to 10 kg/ha active substance and a safener:herbicide ratio by weight of from 1:100 to 100:1.

10. The use of the compounds of type B as safeners for protecting crop plants from the phytotoxic side effects of herbicides of type A, where the herbicide/safener combination A + B is defined as in any of claims 1 to 6.

## Revendications

1. Combinaisons d'herbicide-antidote contenant
A) au moins une substance active herbicide prise dans le groupe des phénylsulfonylurées substituées de formule (A) et de leurs sels 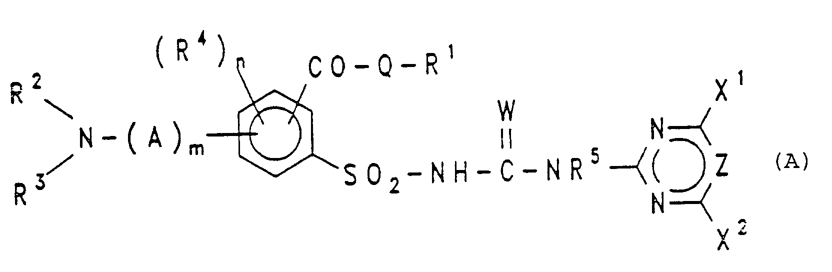 dans laquelle
W représente O ou S,
A représente un groupe de formule CR'R'', dans laquelle R' et R'', indépendamment l'un de l'autre, représentent un atome d'hydrogène ou un groupe alkyle en C₁-C₄,
Q représente O, S ou un groupe NR⁶,
m vaut 0 ou 1,
n vaut 0, 1, 2 ou 3,
R¹ représente un atome d'hydrogène, un reste hydrocarboné ou un reste hétérocyclique, chacun des deux derniers restes cités étant non substitué ou substitué,
R² représente un atome d'hydrogène, un reste OH ou un reste hydrocarboné aliphatique ou un reste hydrocarboxy, chacun des deux derniers restes cités étant non substitué ou substitué,
R³ représente un reste acyle,
R⁴ représente un atome d'halogène, des groupes CN, NO₂, alkyle en C₁-C₄, alkoxy en C₁-C₄, (alkyle en C₁-C₄)carbonyle, (alkoxy en C₁-C₄)carbonyle, chacun des quatre derniers restes cités étant non substitué ou substitué,
R⁵ représente un atome d'hydrogène, des groupes alkyle en C₁-C₅ ou alkoxy en C₁-C₄,
R⁶ représente un atome d'hydrogène, des groupes alkyle en C₁-C₄, alcényle en C₃-C₄, alcynyle en C₃-C₄, chacun des trois derniers restes cités étant non substitué ou substitué par un ou plusieurs restes pris parmi les atomes d'halogène, les groupes alkyle en C₁-C₄, alkoxy en C₁-C₄ et (alkyle en C₁-C₄)thio, ou représente un groupe alkoxy en C₁-C₄ ou OH,
X¹, X² indépendamment l'un de l'autre représentent un atome d'hydrogène, un atome d'halogène, des groupes alkyle en C₁-C₆, alcényle en C₂-C₆, alcynyle en C₂-C₆, cycloalkyle en C₃-C₇, alkoxy en C₁-C₆, alcényloxy en C₂-C₆, alcynyloxy en C₂-C₆, (alkyl en C₁-C₆)thio, mono- ou di-(alkyle en C₁-C₄)amino, chacun des dix derniers restes cités étant non substitué ou substitué par un ou plusieurs restes pris dans le groupe comportant des atomes d'halogène, des groupes alkoxy en C₁-C₄, haloalkoxy en C₁-C₄, et (alkyle en C₁-C₄)thio, et
Z représente CH, N ou un groupe de formule 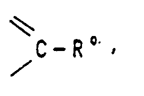 dans laquelle R° représente un atome d'halogène, des groupes cyano, alkyle en C₁-C₃, haloalkyle en C₁-C₃, alkoxy en C₁-C₃ ou haloalkoxy en C₁-C₃, et
B) au moins un antidote pris dans le groupe des composés de formules (B1) et (B2), 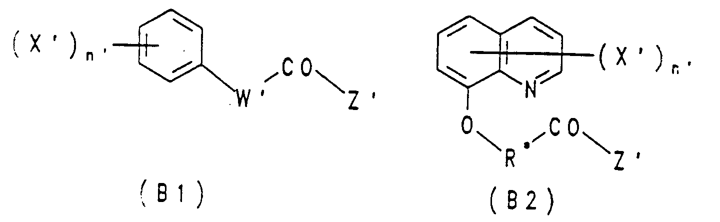 dans lesquelles
X' représente un atome d'hydrogène, un atome d'halogène, des groupes alkyle en C₁-C₄, alkoxy en C₁-C₄, nitro, ou halogénoalkyle en C₁-C₄,
Z' représente OR⁷, SR⁷ ou NR⁷R⁸ ou un hétérocycle saturé ou insaturé à 3 à 7 chaînons avec au moins un atome d'azote et jusqu'à 3 hétéroatomes, lequel est relié par l'intermédiaire de l'atome d'azote au groupe carbonyle dans la formule (B1) respectivement (B2), et est non substitué ou substitué par des restes pris dans le groupe comportant des groupes alkyle en C₁-C₄, alkoxy en C₁-C₄ ou phényle éventuellement substitué,
R* représente une chaîne (alcane en C₁ ou en C₂)diyle, qui est non substituée ou substituée par 1 ou 2 restes alkyle en C₁-C₄ ou (alkoxy en C₁-C₃)carbonyle,
R⁷ représente un atome d'hydrogène ou un reste hydrocarboné aliphatique non substitué ou substitué,
R⁸ représente un atome d'hydrogène, des groupes alkyle en C₁-C₆, alkoxy en C₁-C₆ ou phényle éventuellement substitué,
n' est un nombre entier de 1 à 5, de préférence de 1 à 3,
W' représente un reste hétérocyclique bivalent pris dans le groupe des hétérocycles à 5 chaînons partiellement insaturés ou hétéroaromatiques comportant de 1 à 3 hétéroatomes du type N et O, au moins un atome de N et tout au plus un atome de O étant contenus dans le cycle.

2. Combinaisons d'herbicide-antidote selon la revendication 1, caractérisées en ce que dans les formules (B1), respectivement (B2)
R⁷ représente un atome d'hydrogène, des groupes alkyle en C₁-C₁₈, cycloalkyle en C₃-C₁₂, alcényle en C₂-C₈ ou alcynyle en C₂-C₈, les restes carbonés précités pouvant être non substitués ou substitués une ou plusieurs fois, de préférence jusqu'à 3 fois par des restes identiques ou différents pris dans le groupe contenant des atomes d'halogène, des groupes hydroxy, alkoxy en C₁-C₈, (alkyle en C₁-C₈)mercapto, (alcényle en C₂-C₈)mercapto, (alcynyle en C₂-C₈)mercapto, alcényloxy en C₂-C₈, alcinyloxy en C₂-C₈, cycloalkyle en C₃-C₇, cycloalkoxy en C₃-C₇, cyano, mono- et di(alkyl en C₁-C₄)amino, carboxy, (alkoxy en C₁-C₈)carbonyle, (alcényloxy en C₂-C₈)-carbonyle, (alkyle en C₁-C₈)mercaptocarbonyle, (alcynyloxy en C₂-C₈)-carbonyle, (alkyle en C₁-C₈)-carbonyle, (alcényle en C₂-C₈)carbonyle, (alcynyle en C₂-C₈)carbonyle, 1-[(hydroxyimino)alkyle en C₁-C₆], 1-[(alkyl en C₁-C₄)-imino]-(alkyle en C₁-C₄), 1-[(alkoxy en C₁-C₄)-imino]-(alkyle en C₁-C₆), (alkyl en C₁-C₈)carbonylamino, (alcényl en C₂-C₈)carbonylamino, (alcynyl en C₂-C₈)carbonylamino, aminocarbonyle, (alkyl en C₁-C₈)aminocarbonyle, di-(alkyl en C₁-C₆)aminocarbonyle, (alcényle en C₂-C₆)-aminocarbonyle, (alcynyle en C₂-C₆)aminocarbonyle, (alkoxy en C₁-C₈)carbonylamino, (alkyle en C₁-C₈)aminocarbonylamino, (alkyle en C₁-C₆)carbonyloxy, qui est non substitué ou substitué par des atomes d'halogène des groupes nitro, alkoxy en C₁-C₄ ou phényle éventuellement substitué, (alcényle en C₂-C₆)carbonyloxy, (alcynyle en C₂-C₆)carbonyloxy, (alkyle en C₁-C₈)sulfonyle, phényle, phényl-alkoxy en C₁-C₆, phényl-(alkoxy en C₁-C₆)carbonyle, phénoxy, phénoxy-alkoxy en C₁-C₆, phénoxy(alkoxy en C₁-C₆)carbonyle, phénylcarbonyloxy, phénylcarbonylamino, phényl(alkyle en C₁-C₆)-carbonylamino, les 9 derniers restes cités étant non substitués ou substitués sur le cycle phényle une ou plusieurs fois, de préférence jusqu'à trois fois par des restes identiques ou différents pris dans le groupe comportant des atomes d'halogène, des groupes alkyle en C₁-C₄, alkoxy en C₁-C₄, halogénoalkyle en C₁-C₄, halogénoalkoxy en C₁-C₄, et nitro et les restes de formules -SiR'₃, -O-SiR'₃, R'₃Si(alkoxy en C₁-C₈), -CO-O-NR'₂, -O-N=CR'₂, -N=CR'₂, -O-NR'₂, -CH(OR')₂, -O-(CH₂)ₘ-CH(OR')₂, -CR'''(OR')₂ et -O-(CH₂)ₘCR'''(OR'')₂, où R' dans les formules citées représente, indépendamment l'un de l'autre, des atomes d'hydrogène, des groupes alkyle en C₁-C₄, phényle, lequel est non substitué ou une ou plusieurs fois, de préférence jusqu'à 3 fois substitué par des restes identiques ou différents pris parmi les atomes d'halogène, les groupes alkyle en C₁-C₄, alkoxy en C₁-C₄, halogénoalkyle en C₁-C₄, halogénoalkoxy en C₁-C₄, et nitro, ou par paires, forment une chaîne (alcane en C₂-C₆)diyle et m=0 à 6 et R''' représente un atome d'hydrogène ou un groupe alkyle en C₁-C₄, et un reste alkoxy substitué de formule R''0-CHR'''CH(OR'')-(alkoxy en C₁-C₆), dans laquelle R'', indépendamment l'un de l'autre, représentent un groupe alkyle en C₁-C₄ ou ensemble un groupe (alcane en C₁-C₆)-diyle, et R''' représente un atome d'hydrogène ou un groupe alkyle en C₁-C₄,
W' représente un reste hétérocyclique bivalent pris dans le groupe des restes de formules (W1) à (W4) 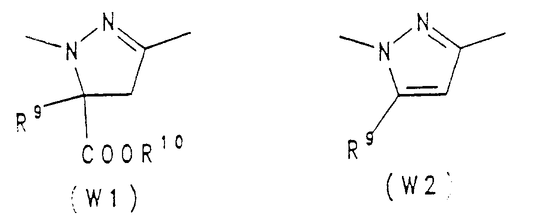 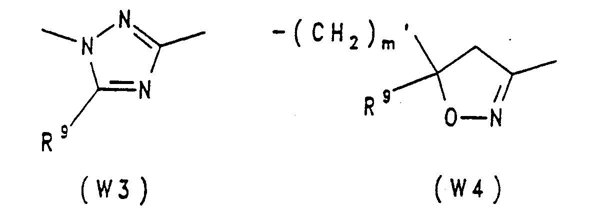
R⁹ représente un atome d'hydrogène, des groupes alkyle en C₁-C₈, halogénoalkyle en C₁-C₈, cycloalkyle en C₃-C₁₂ ou phényle éventuellement substitué,
R¹⁰ représente un atome d'hydrogène, des groupes alkyle en C₁-C₈, halogénoalkyle en C₁-C₈, (alkoxy en C₁-C₄)-alkyle en C₁-C₄, hydroxyalkyle en C₁-C₆, cycloalkyle en C₃-C₁₂ ou tri-(alkyle en C₁-C₄)silyle, et
m' vaut 0 ou 1.

3. Combinaisons d'herbicide-antidote selon la revendication 1 ou 2, caractérisées en ce que dans la formule (A)
R¹ représente des restes alkyle en C₁-C₆, alcényle en C₂-C₆, alcynyle en C₂-C₆, cycloalkyle en C₃-C₆, chacun des quatre derniers restes cités pouvant être non substitué ou substitué par un ou plusieurs restes choisis parmi les atomes d'halogène, les groupes CN, alkoxy en C₁-C₄, (alkyl en C₁-C₄)thio, haloalkoxy en C₁-C₄, mono-(alkyl en C₁-C₄)amino, di-(alkyl en C₁-C₄)amino, (alkyl en C₁-C₄)sulfonyle, (alkyl en C₁-C₄)aminocarbonyle, di-(alkyl en C₁-C₄)aminocarbonyle, phényle et phényle substitué, ou un reste du type hétérocyclyle ou hétérocyclyl-(alkyle en C₁-C₄) avec 3 à 7 atomes de cycle, pris parmi les restes de formules A-1 à A-13 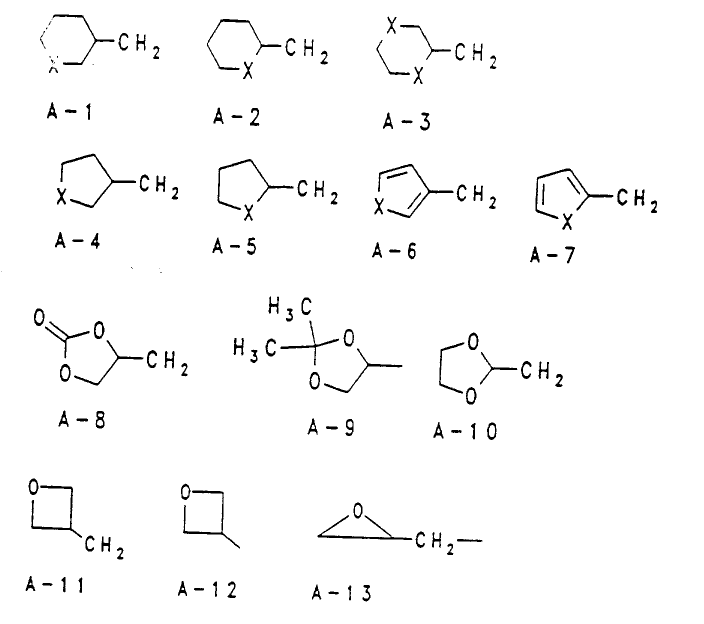
X représente O, S, S(O) ou SO₂,
R² représente H, OH, des groupes alkyle en C₁-C₆, cycloalkyle en C₃-C₇, alcényle en C₂-C₆, alcynyle en C₂-C₆, alkoxy en C₁-C₆, cycloalkoxy en C₃-C₇, alcényloxy en C₂-C₆, alcynyloxy en C₂-C₆, les huit derniers restes cités étant non substitués ou substitués par un ou plusieurs restes pris dans le groupe comportant des groupes alkoxy en C₁-C₄, haloalkoxy en C₁-C₄, alcényloxy en C₂-C₄, haloalcényloxy en C₂-C₄, alcynyloxy en C₂-C₄, haloalcynyloxy en C₂-C₄, (alkyl en C₁-C₄)-thio, (haloalkyl en C₁-C₄)-thio, halogène, OH, NH₂, mono- et di-(alkyl en C₁-C₄)amino, CN, NO₂, CONH₂, CHO, (alkyle en C₁-C₆)-carbonyle, (alkyl en C₁-C₄)-sulfonyle, (alkoxy en C₁-C₄)-carbonyle, mono- et di-(alkyl en C₁-C₄)-aminocarbonyle, ainsi que dans le cas de restes cycliques également alkyle en C₁-C₄ et haloalkyle en C₁-C₄,
R³ représente CO-R¹¹, CO-OR¹², CO-NR¹³R¹⁴, CO-SR¹⁵, CS-R¹⁶, CS-OR¹⁷, CS-NR¹⁸R¹⁹, CS-SR²⁰, SO₂R²¹, SO₂NR²²R²³,
R¹¹ représente un atome d'hydrogène, des groupes alkyle en C₁-C₆, alcényle en C₂-C₆, alcynyle en C₂-C₆, les trois derniers restes cités, indépendamment l'un de l'autre, étant non substitués ou substitués par un ou plusieurs restes pris parmi des atomes d'halogène, des groupes alkoxy en C₁-C₄, (alkyl en C₁-C₄)-thio et NR²⁴R²⁵, ou représentent cycloalkyle en C₃-C₈ non substitué ou substitué, phényle non substitué ou substitué, hétéroaryle non substitué ou substitué ou phénylalkyle en C₁-C₄ non substitué ou substitué sur le cycle phényle,
R¹² représente des groupes alkyle en C₁-C₆, alcényle en C₂-C₆, alcynyle en C₂-C₆, les trois derniers restes cités, indépendamment l'un de l'autre, étant non substitués ou substitués par un ou plusieurs restes choisis parmi les atomes d'halogène, les groupes alkoxy en C₁-C₄, (alkyl en C₁-C₄)-thio et NR²⁶R²⁷, ou représentent cycloalkyle en C₃-C₆, qui est non substitué ou substitué par un ou plusieurs restes choisis parmi les atomes d'halogène, les groupes alkyle en C₁-C₄ et alkoxy en C₁-C₄, ou représentent (cycloalkyle en C₃-C₆)-(alkyle en C₁-C₃),
R¹³ représente un atome d'hydrogène, des groupes alkyle en C₁-C₆, alcényle en C₂-C₆, alcynyle en C₂-C₆, les 3 derniers restes cités, indépendamment l'un de l'autre, étant non substitués ou substitués par un ou plusieurs restes choisis parmi les atomes d'halogène, ou représentent (alkoxy en C₁-C₆)-carbonyle, alkoxy en C₁-C₄ ou OH,
R¹⁴ représente un atome d'hydrogène, des groupes alkyle en C₁-C₆, alcényle en C₂-C₆, alcynyle en C₂-C₆, les trois derniers restes cités, indépendamment l'un de l'autre, étant non substitués ou substitués par un ou plusieurs restes choisis parmi les atomes d'halogène, les groupes alkoxy en C₁-C₄, (alkyl en C₁-C₄)-thio et NR²⁸R²⁹,
ou NR¹³R¹⁴ représente un reste hétérocyclique qui contient dans le cycle au côté de l'atome d'azote d'autres unités hétéro choisies parmi O, N, S, SO ou SO₂, et qui est non substitué ou substitué par un ou plusieurs restes choisis parmi les atomes d'halogène, OH, NH₂, NHCH₃, N(CH₃)₂, CN, CONHCH₃, CO₂CH₃, COCH₃, CON(CH₃)₂, CHO, alkyle en C₁-C₃, CONH₂, alkoxy en C₁-C₃, haloalkoxy en C₁-C₃, haloalkyle en C₁-C₃ et la fonction oxo
R¹⁵ est un reste analogue à R¹²,
R¹⁶ est un reste analogue à R¹¹,
R¹⁷ est un reste analogue à R¹²,
R¹⁸ est un reste analogue à R¹³,
R¹⁹ est un reste analogue à R¹⁴,
ou NR¹⁸R¹⁹ est un reste analogue à NR¹³R¹⁴,
R²⁰ est un reste analogue à R¹²,
R²¹ représente un groupe alkyle en C₁-C₆, alcényle en C₂-C₆, alcynyle en C₂-C₆, les trois derniers restes cités, indépendamment l'un de l'autre, étant non substitués ou substitués par un ou plusieurs restes choisis parmi les atomes d'halogène, les groupes alkoxy en C₁-C₄, (alkyleen C₁-C₄)-thio et NR³⁰R³¹,
R²² représente un reste analogue à R¹³,
R²³ représente un reste analogue à R¹⁴, ou
NR²²R²³ un reste analogue à NR¹³R¹⁴,
R²⁴ représente un atome d'hydrogène, des groupes alkyle en C₁-C₄, haloalkyle en C₁-C₄, alcényle en C₁-C₄, haloalcényle en C₁-C₄, alkoxy en C₁-C₄, haloalkoxy en C₁-C₄ ou hydroxy,
R²⁵ représente un atome d'hydrogène, des groupes alkyle en C₁-C₄, haloalkyle en C₁-C₄, alcényle en C₁-C₄ ou haloalcényle en C₁-C₄,
R²⁶ est analogue à R²⁴,
R²⁷ est analogue à R²⁵,
R²⁸ est analogue à R²⁴,
R²⁹ est analogue à R²⁵,
R³⁰ est analogue à R²⁴ et
R³¹ est analogue à R²⁵.

4. Combinaisons d'herbicide-antidote selon l'une des revendications 1 à 3 caractérisées en ce que
R¹ représente des groupes alkyle en C₁-C₆, alcényle en C₂-C₆, alcynyle en C₂-C₆, cycloalkyle en C₃-C₆, les quatre derniers restes cités étant non substitués ou substitués par un ou plusieurs restes choisis parmi F, Cl, Br, I, OCH₃, OCF₃, N(CH₃)₂, SO₂CH₃, CO₂CH₃, CO₂N(CH₃)₂ et phényle, ou représentent un groupe des formules A-1 à A-13 précitées,
R² représente un atome d'hydrogène, des groupes alkyle en C₁-C₄, alcényle en C₂-C₄, alcynyle en C₂-C₄, cycloalkyle en C₃-C₆ ou haloalkyle en C₁-C₄,
R³ représente CO-R¹¹, CO-OR¹², CO-NR¹³R¹⁴ ou SO₂R²¹,
R⁴ représente un atome d'halogène, des groupes alkyle en C₁-C₃ ou alkoxy en C₁-C₃,
n vaut 0 ou 1,
m vaut 0 ou 1,
R⁵ représente un atome d'hydrogène ou CH₃,
R¹¹ représente un atome d'hydrogène, des groupes alkyle en C₁-C₆, alcényle en C₂-C₄, alcynyle en C₂-C₄, haloalkyle en C₁-C₄, (alkoxy en C₁-C₄)-alkyle en C₁-C₄, phényle ou hétéroaryle avec 5 ou 6 chaînons, chacun des deux derniers restes cités étant non substitué ou substitué,
R¹² représente un reste analogue à R¹¹, à l'exception de l'hydrogène,
R¹³, R¹⁴, indépendamment l'un de l'autre, représentent un atome d'hydrogène ou alkyle en C₁-C₄,
R²¹ représente des groupes alkyle en C₁-C₄, haloalkyle en C₁-C₄ ou (alkoxy en C₁-C₄)-(alkyle en C₁-C₄),
l'un des restes X¹ et X² représente un atome d'halogène, des groupes alkyle en C₁-C₂, alkoxy en C₁-C₂, (alkyl en C₁-C₂)-thio, chacun des trois derniers restes cités étant non substitué ou substitué par un ou plusieurs restes choisis parmi un atome d'halogène, des groupes alkoxy en C₁-C₂ et (alkyl en C₁-C₂)-thio, ou représente mono- ou di-(alkyl en C₁-C₂)amino, et
l'autre des restes X¹ et X² représente un groupe alkyle en C₁-C₂, haloalkyle en C₁-C₂, alkoxy en C₁-C₂, haloalkoxy en C₁-C₂ ou (alkyl en C₁-C₂)-thio,
Z représente CH ou N.

5. Combinaisons d'herbicide-antidote selon l'une des revendications 1 à 4, caractérisées en ce qu'elles sont formulées sous forme d'une préparation (agent herbicide) laquelle contient de 0,1 à 95 % en poids de substance active (A) et (B) et de 1 à 99,9 % en poids d'agent de formulation usuel.

6. Combinaisons d'herbicide-antidote selon une ou plusieurs des revendications 1 à 5, caractérisées en ce qu'elles contiennent les substances actives de type (A) et (B) dans un rapport pondéral de 1:100 à 100:1.

7. Procédé pour la protection des plantes de culture contre les effets secondaires phytotoxiques des herbicides du type A, caractérisé en ce que l'on applique une quantité efficace d'un antidote du type B avant ou simultanément à l'application de l'herbicide A aux plantes, aux parties de plantes, à la semence ou à la surface cultivable, la combinaison de l'herbicide (A) et de l'antidote (B) étant définie selon l'une des revendications 1 à 6.

8. Procédé selon la revendication 7, caractérisé en ce que les plantes de culture sont les céréales, le riz et le maïs.

9. Procédé selon une ou plusieurs des revendications 7 ou 8, caractérisé en ce que les herbicides du type (A) sont appliqués dans une concentration d'emploi de 0,001 à 10 kg/ha de substance active et dans un rapport pondéral de l'antidote:herbicide de 1:100 à 100:1.

10. Utilisation des composés du type B comme antidotes pour la protection des plantes de culture contre les effets secondaires phytotoxiques des herbicides du type A, la combinaison de l'herbicide, antidote A + B étant définie selon l'une des revendications 1 à 6.
